# EUROPEAN PATENT SPECIFICATION

(11) **EP 3 580 897 B1**
(45) Date of publication and mention of the grant of the patent: **07.04.2021**
(21) Application number: 17706315.3
(22) Date of filing: 13.02.2017
(51) Int. Cl.: H04L 12/721, H04L 12/24, H04W 4/24, H04M 15/00, H04L 12/715, H04L 12/717, H04L 12/14, H04L 29/06, H04L 12/725

(54) **METHOD AND APPARATUS FOR DYNAMIC SERVICE CHAINING WITH SEGMENT ROUTING FOR BNG**
VERFAHREN UND VORRICHTUNG FÜR DYNAMISCHE DIENSTVERKETTUNG MIT SEGMENTWEGLENKUNG FÜR BNG
PROCÉDÉ ET APPAREIL DE CHAÎNAGE DE SERVICE DYNAMIQUE AVEC ROUTAGE DE SEGMENT POUR BNG

(43) Date of publication of application: 18.12.2019
(73) Proprietor: Telefonaktiebolaget LM Ericsson (publ), 164 83 Stockholm (SE)
(72) Inventor: PAI, Narayana Hosdurg, Bangalore 560 024 (IN); BAFNA, Manikchand Roopchand, Bengaluru 560 020 (IN); RAMAIAH, Anantha, San Jose, California 95136 (US)
(74) Representative: Zacco Sweden AB
(86) International application number: PCT/IB2017/050798
(87) International publication number: WO 2018/146526

(56) References cited:
- EP-A1- 2 945 329
- US-A1- 2014 169 375
- US-A1- 2015 271 102
- US-A1- 2016 099 864
- US-A1- 2016 344 565

## Description

### TECHNICAL FIELD

Embodiments of the invention relate to the field of computer networks; and more specifically, to the field of service chaining in computer networks.

### BACKGROUND

A Broadband Network Gateway (BNG) is a network gateway through which subscribers can access a broadband network. The BNG is typically responsible for managing subscriber access to the broadband network. For example, the BNG may be responsible for authenticating subscribers, applying various services for subscribers, and keeping track of accounting information for billing purposes. A single BNG typically manages multiple subscriber sessions. The resources of the BNG are optimized by dynamically allocating resources for a subscriber session when the subscriber is admitted and releasing the resources allocated for the subscriber session when the subscriber session becomes stale or is otherwise terminated. The most common types of subscriber sessions are Point-to-Point Protocol over Ethernet (PPPoE) and Internet Protocol over Ethernet (IPoE). Various services can be applied to subscriber sessions such as a volume limit service, an absolute timeout service, minimum bandwidth guarantee service, and a deep packet inspection (DPI) service (e.g., for parental control). These services are typically applied by the BNG in the forwarding path itself, and in some cases by specialized service nodes in the data center.

Applying services at the BNG itself makes it difficult to offer flexible services that can be differentiated on a per-subscriber basis. As such, service providers typically only offer a limited number of pre-defined service offerings to subscribers. For example, the service offerings may only include three levels of service: platinum class, gold class, and silver class. This restricts subscribers from being able to customize the services they receive, even if the subscribers are willing to pay for customized service packages. Moreover, introducing a new service necessitates a hardware and/or software upgrade at the BNG, which can disrupt existing subscriber sessions and can be time consuming to test and deploy, which increases the time to market.

Applying services at specialized service nodes in the data center requires reclassification at every service hop to determine the next service in the chain. Such solutions cause traffic to traverse back and forth from a service node to a switching node, thereby causing a tromboning effect.

US20160344565A1 discloses a method to facilitate assignment of service functions for service chains in a network environment. A first service function group from a plurality of service function groups is selected to perform one or more services for the IP session for the subscriber and the IP session for the subscriber to the first service function group is assigned and then a first IP flow for the IP session of the subscriber is forwarded based on a service policy.

EP2945329A1 discloses a mechanism to transmit a subscriber's packet into a service chain. The packet is received at a gateway and a service chain associated with the packet is determined. Further, the packet is appended with a header, which includes an identification information for the subscriber and an Internet Protocol (IP) address.

US20150271102A1 discloses a mechanism selectively utilizing resources of service nodes. Each of the service nodes expose their service resources and capabilities, including the level of utilization of those service resources. Accordingly, a network element is configured to make the appropriate choices, such as selecting which service node to use.

US20160099864A1 discloses a method for selective service bypass in service function chaining. The method includes identifying a failure of a service function at a service node in a service chain, receiving a packet at the service node, and processing the packet at the service node according to a flag associated with the service function and set based on a criticality of the service function.

US20140169375A1 discloses a method for mobile service routing in a network environment. A data flow is received from a mobile network relating to a mobile subscriber. Packets of the data flow are routed according to the service path, the packets corresponding to a request for a resource. At least one packet is appended with service header data identifying the service policy. Each service node performs at least one service based on received request data.

### SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention. A method is performed by a network device functioning as a Broadband Network Gateway (BNG) to enable dynamic service chaining for subscribers. The method includes receiving a first sign of life packet from a subscriber device associated with a subscriber, transmitting, to an authentication, authorization, and accounting (AAA) server, a request to authenticate the subscriber in response to receiving the first sign of life packet from the subscriber device associated with the subscriber, receiving information pertaining to a service chain associated with the subscriber upon successful authentication of the subscriber by the AAA server, generating a routing header to be added to packets belonging to the subscriber based on the information pertaining to the service chain associated with the subscriber, where the routing header includes an indication of the service chain associated with the subscriber, receiving a data packet from the subscriber device associated with a subscriber, retrieving the routing header to be added to packets belonging to the subscriber, adding the routing header to the data packet, and forwarding the data packet with the routing header along the service chain associated with the subscriber indicated in the routing header.

A network device is configured to function as a Broadband Network Gateway (BNG) that enables dynamic service chaining for subscribers. The network device includes a set of one or more processors and a non-transitory machine-readable storage medium having stored therein a dynamic service chaining component. The dynamic service chaining component, when executed by the set of one or more processors, causes the network device to receive a first sign of life packet from a subscriber device associated with a subscriber, transmit, to an authentication, authorization, and accounting (AAA) server, a request to authenticate the subscriber in response to receiving the first sign of life packet from the subscriber device associated with the subscriber, receiving information pertaining to a service chain associated with the subscriber upon successful authentication of the subscriber by the AAA server, generate a routing header to be added to packets belonging to the subscriber based on the information pertaining to the service chain associated with the subscriber, where the routing header includes an indication of the service chain associated with the subscriber, receive a data packet from the subscriber device associated with a subscriber, retrieve the routing header to be added to packets belonging to the subscriber, add the routing header to the data packet, and forward the data packet with the routing header along the service chain associated with the subscriber indicated in the routing header.

A non-transitory machine-readable medium has computer code stored therein, which when executed by a set of one or more processors of a network device functioning as a Broadband Network Gateway (BNG), causes the network device to perform operations for enabling dynamic service chaining for subscribers. The operations include receiving a first sign of life packet from a subscriber device associated with a subscriber, transmitting, to an authentication, authorization, and accounting (AAA) server, a request to authenticate the subscriber in response to receiving the first sign of life packet from the subscriber device associated with the subscriber, receiving information pertaining to a service chain associated with the subscriber upon successful authentication of the subscriber by the AAA server, generating a routing header to be added to packets belonging to the subscriber based on the information pertaining to the service chain associated with the subscriber, where the routing header includes an indication of the service chain associated with the subscriber, receiving a data packet from the subscriber device associated with a subscriber, retrieving the routing header to be added to packets belonging to the subscriber, adding the routing header to the data packet, and forwarding the data packet with the routing header along the service chain associated with the subscriber indicated in the routing header.

### BRIEF DESCRIPTION OF THE DRAWINGS

The invention may best be understood by referring to the following description and accompanying drawings that are used to illustrate embodiments of the invention. In the drawings:
Fig. 1 is a block diagram illustrating components of a Broadband Network Gateway (BNG) that provides services for subscribers, according to conventional techniques.
Fig. 2 is a block diagram of a network in which services can be provided for subscribers, according to conventional techniques.
Fig. 3 is a block diagram of a network in which dynamic service chaining for subscribers can be implemented, according to some embodiments.
Fig. 4 is a block diagram illustrating components of a BNG that enables dynamic service chaining for subscribers, according to some embodiments.
Fig. 5 is a flow diagram illustrating operations for performing dynamic service chaining for upstream traffic, according to some embodiments.
Fig. 6 is a flow diagram illustrating dynamic service chaining for downstream traffic, according to some embodiments.
Fig. 7 is a timing diagram illustrating session establishment for dynamic service chaining, according to some embodiments.
Fig. 8 is a flow diagram of a process for implementing dynamic service chaining for subscribers, according to some embodiments.
Figure 9A illustrates connectivity between network devices (NDs) within an exemplary network, as well as three exemplary implementations of the NDs, according to some embodiments.
Figure 9B illustrates an exemplary way to implement a special-purpose network device according to some embodiments.
Figure 9C illustrates various exemplary ways in which virtual network elements (VNEs) may be coupled according to some embodiments.
Figure 9D illustrates a network with a single network element (NE) on each of the NDs, and within this straight forward approach contrasts a traditional distributed approach (commonly used by traditional routers) with a centralized approach for maintaining reachability and forwarding information (also called network control), according to some embodiments.
Figure 9E illustrates the simple case of where each of the NDs implements a single NE, but a centralized control plane has abstracted multiple of the NEs in different NDs into (to represent) a single NE in one of the virtual network(s), according to some embodiments.
Figure 9F illustrates a case where multiple VNEs are implemented on different NDs and are coupled to each other, and where a centralized control plane has abstracted these multiple VNEs such that they appear as a single VNE within one of the virtual networks, according to some embodiments.
Figure 10 illustrates a general purpose control plane device with centralized control plane (CCP) software 1050), according to some embodiments.

### DETAILED DESCRIPTION

The following description describes methods and apparatus for performing dynamic service chaining for subscribers. In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors (e.g., wherein a processor is a microprocessor, controller, microcontroller, central processing unit, digital signal processor, application specific integrated circuit, field programmable gate array, other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some embodiments, a physical NI may comprise radio circuitry capable of receiving data from other electronic devices over a wireless connection and/or sending data out to other devices via a wireless connection. This radio circuitry may include transmitter(s), receiver(s), and/or transceiver(s) suitable for radiofrequency communication. The radio circuitry may convert digital data into a radio signal having the appropriate parameters (e.g., frequency, timing, channel, bandwidth, etc.). The radio signal may then be transmitted via antennas to the appropriate recipient(s). In some embodiments, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate via wire through plugging in a cable to a physical port connected to a NIC. One or more parts of an embodiment of the invention may be implemented using different combinations of software, firmware, and/or hardware.

A network device (ND) is an electronic device that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

Segment routing (SR) leverages the source routing paradigm. With SR, a node steers a packet through an ordered list of instructions, called segments. A segment can represent any instruction, topological or service-based. A segment can have a local semantic to an SR node or global within an SR domain. SR allows enforcement of a flow through any topological path and service chain while maintaining per-flow state only at the ingress node to the SR domain.

SR can be directly applied to the MPLS architecture with no change on the forwarding plane by encoding a segment as an MPLS label. An ordered list of segments is encoded as a stack of labels. The segment to be processes is on the top of the stack. Upon processing a segment, the related label is popped from the stack. SR can also be applied to an Internet Protocol (IP) version 6 architecture.

Service chaining refers to the ability to steer traffic through a selected set of service nodes that apply a selected set of services. A service chain defines an ordered set of one or more services to be applied to traffic. A service is responsible for specific treatment of traffic. Examples of services include a volume limit service, a minimum bandwidth guarantee service, and/or a deep packet inspection service. Request for Comments (RFC) 7665 titled "Service Function Chaining (SFC) Architecture" describes an exemplary technique for implementing service chaining. Embodiments disclosed herein may leverage SR and service chaining concepts to provide dynamic service chaining for subscribers.

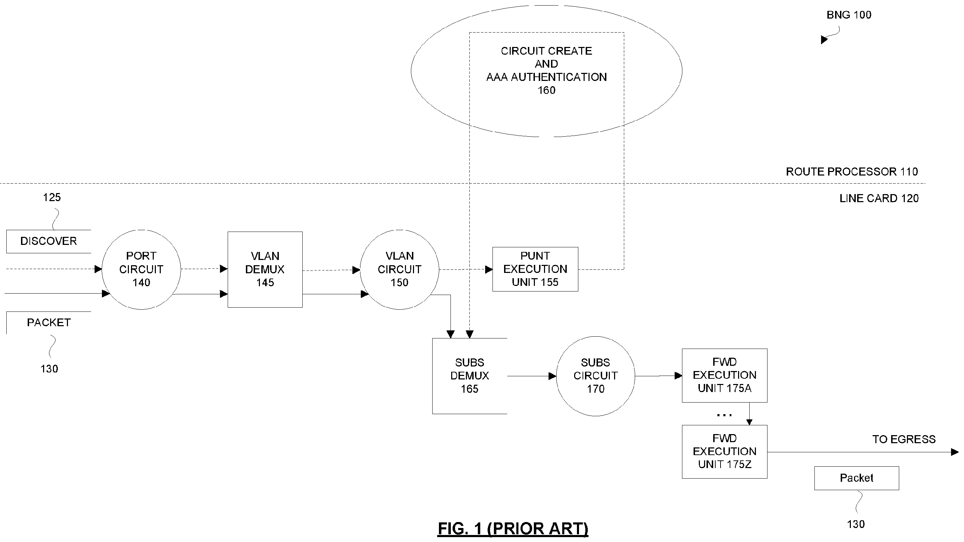

Fig. 1 is a block diagram illustrating components of a Broadband Network Gateway (BNG) that provides services for subscribers, according to conventional techniques. The technique is implemented by a BNG 100. The BNG 100 includes a line card 120 and a route processor 110. The line card 120 may include a port circuit 140, a VLAN demux 145, a VLAN circuit 150, a punt execution unit 155, a subscriber demux 165, a subscriber circuit 170, and one or more forwarding execution units 175. The route processor 110 may include a module 160 for creating a subscriber circuit and performing authentication (e.g., with an authentication, authorization, and accounting (AAA) server).

When the BNG 100 receives a control packet belonging to a subscriber (e.g., a first sign of life packet/message such as a Dynamic Host Configuration Protocol (DHCP) Discover packet 125, a Point-to-Point Protocol over Ethernet (PPPoE) Active Discovery Initiation (PADI) packet, or a DHCP version 6 (DHCPv6) solicit message), the control packet is directed to the punt execution unit 155 (e.g., via VLAN demux 145 and VLAN circuit 150). The punt execution unit 155 punts the control packet to the route processor 110. Upon receiving the control packet, the route processor 110 authenticates the subscriber by contacting an AAA server. If the subscriber is successfully authenticated, the route processor 110 receives the list of authorized services for the subscriber from the AAA server (e.g., as part of a subscriber record), allocates an Internet Protocol (IP) address for the subscriber by contacting a Dynamic Host Configuration Protocol (DHCP) server, creates the subscriber circuit 170 on the line card 120, adds a demux entry for the subscriber in the subscriber demux 165, and installs the forwarding execution units 175A-Z. The forwarding execution units 175A-Z are configured to apply the authorized services for the subscriber. The BNG 100 then offers the allocated IP address to the subscriber. The BNG 100 is then ready to process data packets belonging to the subscriber.

When the BNG 100 subsequently receives a data packet belonging to the subscriber (e.g., packet 130), the data packet is directed to the forwarding execution units 175 (e.g., via VLAN demux 145, VLAN circuit 150, subscriber demux 165, and subscriber circuit 170). The forwarding execution units 175 process the data packet to apply the authorized services for the subscriber and forward the packet out of the BNG 100 (to egress).

The technique described above thus applies services for the subscriber at the BNG 100 itself (e.g., via forwarding execution units 175). A disadvantage of applying services at the BNG 100 itself is that it makes it difficult to offer flexible services that can be differentiated on a per-subscriber basis. As such, service providers typically only offer a limited number of pre-defined service offerings to subscribers. For example, the service offerings may only include three levels of service: platinum class, gold class, and silver class. This restricts subscribers from being able to customize the services they receive, even if the subscribers are willing to pay for customized service packages. Moreover, introducing a new service necessitates a hardware and/or software upgrade at the BNG 100, which can disrupt existing subscriber sessions and can be time consuming to test and deploy, which increases the time to market.

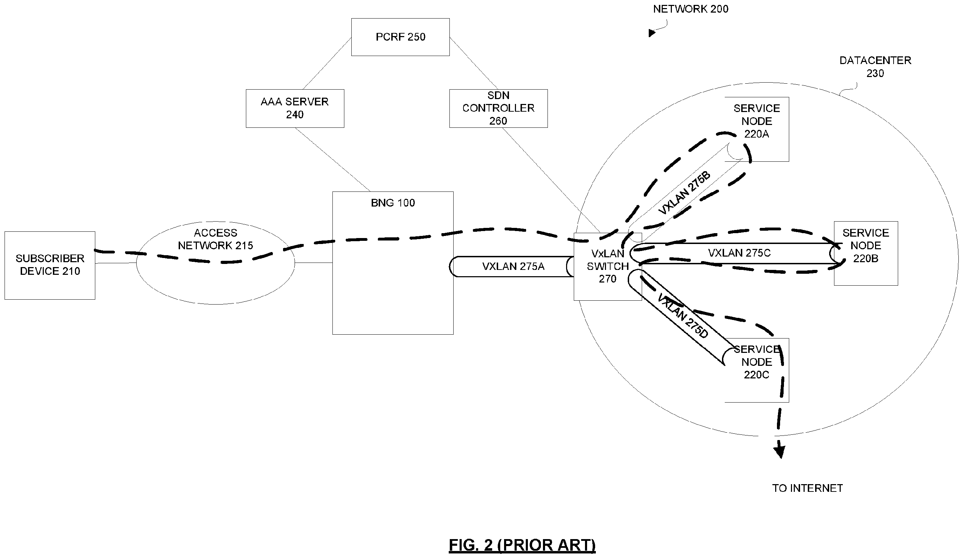

Fig. 2 is a block diagram of a network in which services can be provided for subscribers, according to conventional techniques. The network 200 includes a subscriber device 210 that is communicatively coupled to a BNG 100 over an access network 215. The BNG 100 is communicatively coupled to a data center 230. The data center 230 includes a Virtual eXtensible Local Area Network (VxLAN) switch 270 and a set of service nodes 220A-C, where each service node 220 is configured to apply a particular service. The BNG 100 is also communicatively coupled to an AAA server 240. The AAA 240 server is configured to provide authentication, authorization, and accounting services. The AAA server 240 is communicatively coupled to a policy and charging rules function (PCRF) 250. The PCRF 250 is configured to determine policy rules in the network 200. The PCRF 250 is communicatively coupled to a software defined networking (SDN) controller 260. The SDN controller 260 is communicatively coupled to the VxLAN switch 270. The SDN controller 260 is configured to program the forwarding behavior of the network devices in its domain (e.g., the VxLAN switch 270 and the service nodes 220).

Once the subscriber is authenticated, the PCRF 250 causes the SDN controller 260 to program the VxLAN switch 270 to forward data packets belonging to the subscriber to the appropriate service nodes 220. When the BNG 100 receives a data packet belonging to the subscriber in the upstream direction (e.g., from subscriber device 210 towards Internet), the BNG 100 adds a VxLAN header with a VxLAN network identifier (VNI) to the data packet and forwards the data packet to the VxLAN switch 270 (e.g., via VxLAN tunnel 275A). The VxLAN switch 270 forwards the data packet to the appropriate service nodes 220 via the appropriate VxLAN tunnels 275, as programmed by the SDN controller 260. For example, as shown in the diagram, the VxLAN switch 270 may forward the data packet to service node 220A via VxLAN tunnel 275B, and then forward the data packet to service node 220B via VxLAN tunnel 275C, and then forward the data packet to service node 220C via VxLAN tunnel 275C. Each of the service nodes 220 may apply a particular service. Service node 220C forwards the data packet out of the data center 230 and towards the Internet.

The technique described above thus employs a dedicated VxLAN switch 270 that controls which services will be applied. A disadvantage of this technique is that it requires hop-by-hop classification and causes traffic to traverse back and forth from a service node 220 to a switching node (e.g., VxLAN switch 270), thereby causing a tromboning effect, which can increase latency, and thereby decreasing performance.

Embodiments disclosed herein avoid some of the disadvantages of the conventional techniques by enabling dynamic service chaining for subscribers. With dynamic service chaining, the services provided to subscribers can be customized on a per-subscriber basis. Also, the services provided to a particular subscriber can be dynamically changed without having to perform a hardware upgrade and/or software upgrade at the BNG 100, and without disrupting existing subscriber sessions. Also, new services can be introduced and provided to subscribers without disrupting existing services, which allows for faster time to market. Also, with dynamic service chaining, services can be provided without requiring hop-by-hop reclassification of packets.

According to some embodiments, when a BNG 100 receives a first sign of life packet from a subscriber device associated with a subscriber, the BNG 100 transmits a request to an AAA server 240 to authenticate the subscriber. If the AAA server 240 successfully authenticates the subscriber, the AAA server 240 transmits information pertaining to a service chain associated with the subscriber to the BNG 100 (e.g., as part of a subscriber record for the subscriber). The service chain associated with the subscriber defines an ordered set of one or more services to be applied to the subscriber's traffic. For example, the ordered set of one or more services may include a volume limit service, a minimum bandwidth guarantee service, and/or a deep packet inspection service. The service chain may have been generated based on input from the subscriber regarding the services the subscriber wishes to receive (e.g., the subscriber may have provided input through a portal provided by the service provider). The BNG 100 may generate a routing header to be added to packets belonging to the subscriber based on the information received from the AAA server 240, where the routing header includes an indication of the service chain associated with the subscriber. When the BNG 100 subsequently receives a data packet from the subscriber device 210 associated with the subscriber, the BNG 100 adds the routing header to the packet (which includes the indication of the service chain associated with the subscriber). The BNG 100 then forwards the data packet with the routing header along the service chain associated with the subscriber indicated in the routing header, which causes the packet to be processed by the one or more ordered services of the service chain associated with the subscriber. Other embodiments are described further herein below.

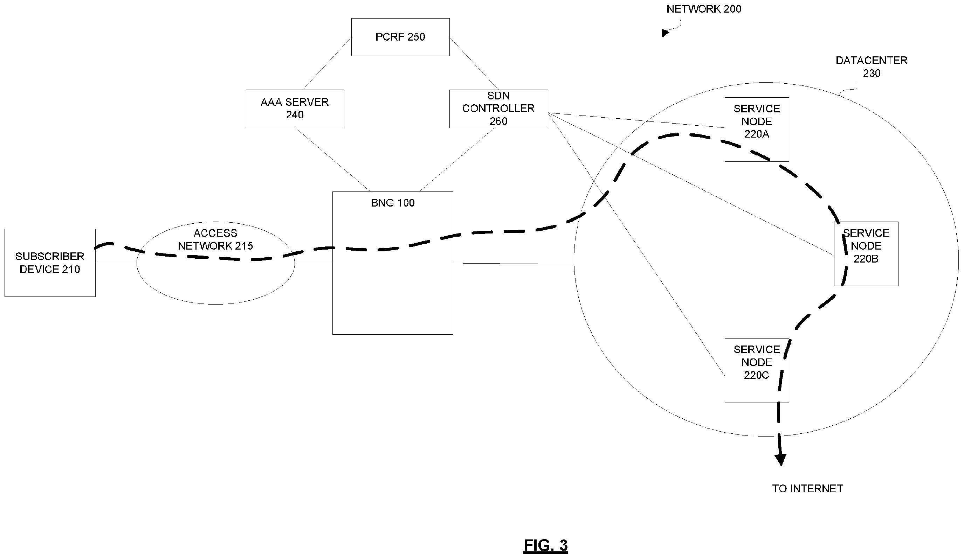

Fig. 3 is a block diagram of a network in which dynamic service chaining for subscribers can be implemented, according to some embodiments. The network 200 includes a subscriber device 210 that is communicatively coupled to a BNG 100 over an access network 215. The subscriber device may be an end user device or a customer premises equipment (CPE). End user devices may include devices such as workstations, laptops, netbooks, tablets, palm tops, mobile phones, smartphones, phablets, multimedia phones, Voice Over Internet Protocol (VoIP) phones, terminals, portable media players, Global Positioning System (GPS) units, wearable devices, gaming systems, set-top boxes, and/or Internet enabled household appliances. CPEs may include devices such as a residential gateway and/or a modem.

The BNG 100 is communicatively coupled to a data center 230. The data center 230 includes a set of service nodes 220A-C, where each service node 220 is configured to apply a particular service. The BNG 100 is also communicatively coupled to an AAA server 240. The AAA server 240 is configured to provide authentication, authorization, and accounting services. The AAA server 240 is communicatively coupled to a PCRF 250. The PCRF 250 is configured to determine policy rules in the network 200. The PCRF 250 is communicatively coupled to an SDN controller 260. The SDN controller 260 is communicatively coupled to the service nodes 220. The SDN controller 260 is configured to program the forwarding behavior of the network devices in its domain (e.g., service nodes 220).

The subscriber device 210 (which is associated with a subscriber) may request access to a service provider's network 200 by transmitting a first sign of life packet to the BNG 100. The first sign of life packet may be, for example, a DHCP Discover packet, a PADI packet, a DHCPv6 solicit message, or even a first data packet. Upon receiving the first sign of life packet from the subscriber device 210, the BNG 100 transmits a request to the AAA server 240 to authenticate the subscriber. The AAA server 240 maintains subscriber records for subscribers. In one embodiment, the subscriber record for a subscriber may include information pertaining to a service chain associated with the subscriber. The service chain associated with the subscriber defines an ordered set of one or more services to be applied to the subscriber's traffic. For example, the ordered set of one or more services may include a volume limit service, a minimum bandwidth guarantee service, and/or a deep packet inspection service. The service chain may have been generated based on input from the subscriber regarding the services that the subscriber wishes to receive (e.g., the subscriber may have provided input through a portal provided by the service provider, which updates the subscriber record in AAA server 240 and/or updates the charging information in PCRF 250). If the AAA server 240 successfully authenticates the subscriber, the AAA server 240 transmits the information pertaining to the service chain associated with the subscriber to the BNG 100 (e.g., as part of the subscriber record for the subscriber). The AAA server 240 also causes the PCRF 250 to provision service parameters related to one or more services of the service chain associated with the subscriber to one or more network devices (e.g., serving nodes 220) that apply the respective services. The BNG 100 may generate (and store) a routing header to be added to packets belonging to the subscriber based on the information received from the AAA server 240, where the routing header includes an indication of the service chain associated with the subscriber. In one embodiment, the routing header is an SR header and the indication of the service chain associated with the subscriber includes a stack of one or more segment routing labels (in this embodiment, the BNG 100 serves as the ingress to the SR domain). In another embodiment, the routing header is a Network Service Header (NSH) and the indication of the service chain associated with the subscriber includes a service path identifier. The BNG 100 may configure a subscriber circuit for the subscriber to add the routing header to packets belonging to the subscriber.

When the BNG 100 subsequently receives a data packet from the subscriber device associated with the subscriber (in the upstream direction), the BNG 100 adds the routing header to the data packet (which includes the indication of the service chain associated with the subscriber). The BNG 100 then forwards the data packet along the service chain associated with the subscriber indicated in the routing header. This causes the data packet to be processed by the one or more services of the service chain associated with the subscriber before the data packet leaves the data center. As an example, as shown in the diagram, adding the routing header to the data packet may cause the data packet to traverse service node 220A, service node 220B, and service node 220C, before being forwarded out of the data center and towards the Internet.

In one embodiment, during subscriber bring up, an Internet gateway (e.g., service node 220C) is provisioned with information pertaining to a downstream service chain associated with the subscriber. The downstream service chain is the service chain that corresponds to the subscriber's downstream traffic. As used herein, the term "upstream" or "upstream direction" generally refers to the direction that goes from the subscriber device 210 towards the service provider's network 200. As used herein, the term "downstream" or "downstream direction" generally refers to the direction that goes from the service provider's network 200 towards the subscriber device 210. It should be noted that the downstream service chain may be different from the upstream service chain, and thus the services that are applied in the downstream direction may be different from the services that are applied in the upstream direction. The Internet gateway is configured to add a routing header to data packets destined for the subscriber device, where the routing header includes an indication of the downstream service chain associated with the subscriber. This causes data packets destined for the subscriber device to be processed by one or more services of the downstream service chain associated with the subscriber before reaching the subscriber device.

Subscriber identification in the upstream direction may be based on the source IP address indicated in the upstream data packet, source MAC address indicated in the data packet, or a session identifier (ID). Subscriber identification in the downstream direction may be based on the destination IP address indicated in the downstream data packet. For example, the Internet gateway may determine the appropriate routing header to add to data packets in the downstream direction by performing a lookup in the forwarding information base (FIB) based on destination IP address.

The service chain (upstream and/or downstream) can be dynamically re-provisioned based on a change of authorization that changes the routing header that is added to packets belonging to the subscriber and/or destined for the subscriber. New services can be introduced by introducing new virtual machines (VMs) and/or servers in the data center to apply those services without impacting services for existing subscribers.

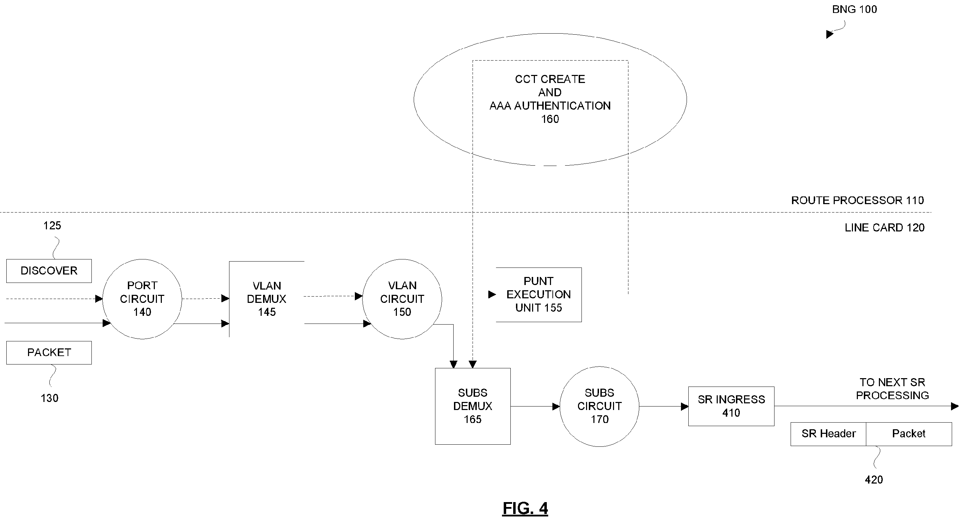

Fig. 4 is a block diagram illustrating components of a BNG that enables dynamic service chaining for subscribers, according to some embodiments. The BNG 100 includes a line card and a route processor. The line card 120 may include a port circuit 140, a VLAN
demux 145, a VLAN circuit 150, a punt execution unit 155, a subscriber demux 165, a subscriber circuit 170, and an SR ingress execution unit 410. The route processor 110 may include a module 160 for creating a subscriber circuit and performing authentication (e.g., with an authentication, authorization, and accounting (AAA) server).

When the BNG 100 receives a control packet belonging to a subscriber (e.g., a first sign of life packet such as a DHCP Discover packet 125, a Point-to-Point Protocol over Ethernet (PPPoE) Active Discovery Initiation (PADI) packet, or a DHCP version 6 (DHCPv6) solicit message), the control packet is directed to the punt execution unit 155 (e.g., via VLAN
demux 145 and VLAN circuit 150). The punt execution unit 155 punts the control packet to the route processor 110. Upon receiving the control packet, the route processor 110 authenticates the subscriber by contacting an AAA server 240. If the subscriber is successfully authenticated, the route processor 110 obtains an SR header from the AAA server 240 (e.g., as part of a subscriber record). In addition, the route processor 110 may allocate an Internet Protocol (IP) address for the subscriber by contacting a DHCP server, create the subscriber circuit 170 on the line card 120, add a demux entry for the subscriber in the subscriber demux 165, and install the SR ingress execution unit 410. The SR ingress execution unit 410 is configured to add the SR header (which was received from the AAA server 240) to packets belonging to the subscriber. The BNG 100 then offers the allocated IP address to the subscriber. The BNG 100 is then ready to process data packets belonging to the subscriber.

When the BNG 100 subsequently receives a data packet belonging to the subscriber (e.g., packet 130), the data packet is directed to the SR ingress execution unit (e.g., via VLAN demux 145, VLAN circuit 150, subscriber demux 165, and subscriber circuit 170). The SR ingress execution unit adds the SR header to the data packet and forwards the packet 420 (with the SR header added) out of the BNG 100 (according to the contents of the SR header).

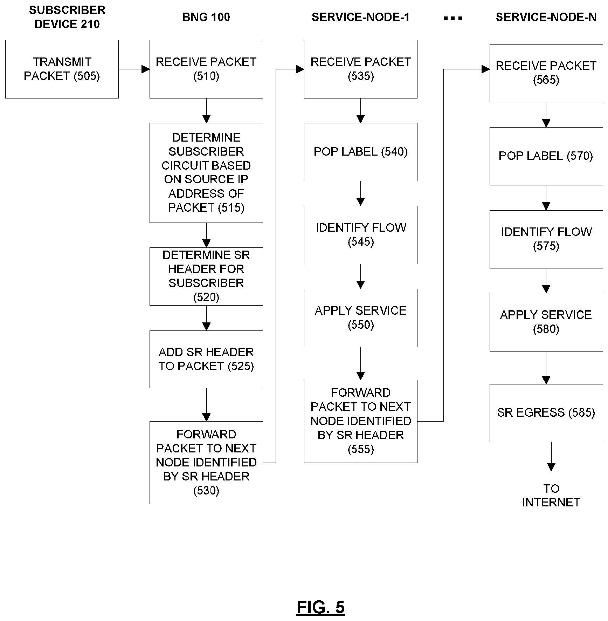

Fig. 5 is a flow diagram illustrating operations for performing dynamic service chaining for upstream traffic, according to some embodiments. The operations in the flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

The subscriber device 210 transmits a packet to the BNG 100 (block 505). The BNG 100 receives the packet (block 510) and determines the subscriber circuit for the subscriber based on the source IP address of the packet (block 515). The BNG 100 then determines the SR header for the subscriber (block 520). The BNG 100 then adds the SR header to the packet (block 525) and forwards the packet (with the SR header added) to the next node identified by the SR header (block 530), which in this example is service-node-1. Service-node 1 receives the packet (block 535) and pops the label (corresponding to itself) (block 540). Service-node-1 then identifies the flow (block 545) and applies its service (block 550). Service-node-1 then forwards the packet to the next node identified by the SR header (block 555). The next service node and any subsequent service nodes may perform a similar process to that performed by service-node-1 (e.g., similar to the operations of blocks 510-530). When the last service node (e.g., service-node-N) in the chain receives the packet (block 565), it pops the label (block 570), identifies the flow (block 575), and applies its service (block 580). The last service node then forwards the packet out of the SR domain and towards the Internet (block 585).

In this example, the BNG 100 acts as the SR ingress and service-node-N acts as the SR egress. The example uses SR to route the packet to the appropriate service nodes 220. However, it should be understood that this is by way of example, and not intended to be limiting. Different embodiments may use a different routing/overlay technology (e.g., NSH).

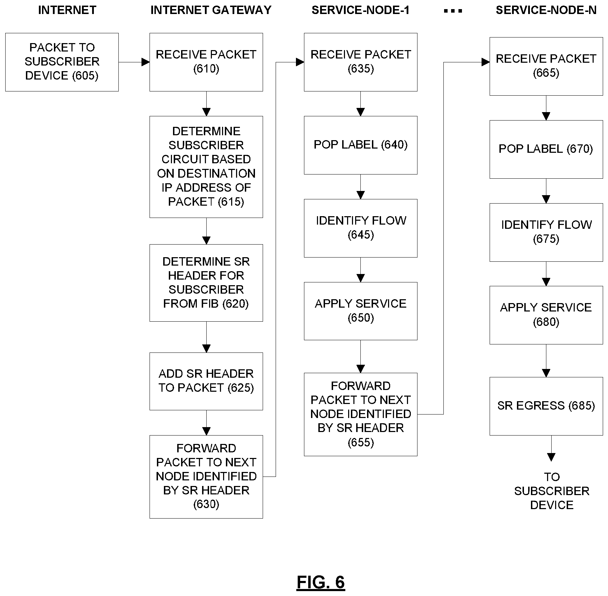

Fig. 6 is a flow diagram illustrating dynamic service chaining for downstream traffic, according to some embodiments. A packet destined for the subscriber device is generated from the Internet (block 605). The Internet gateway receives the packet (block 610) and determines the subscriber circuit for the subscriber based on the destination IP address of the packet (e.g., a FIB lookup) (block 615). The Internet gateway then determines the segment routing header for the subscriber (e.g., from the FIB lookup) (block 620). The Internet gateway then adds the SR header to the packet (block 625) and forwards the packet (with the SR header added) to the next node identified by the SR header (block 630), which in this example is service-node-1. Service-node-1 receives the packet (block 635) and pops the label (which corresponds to itself) (block 640). Service-node-1 then identifies the flow (block 645) and applies its service (block 650). Service-node-1 then forwards the packet to the next node identified by the SR header (655). The next service node and any subsequent service nodes may perform a similar process to that performed by service-node-1 (e.g., similar to the operations of blocks 610-630). When the last service node (e.g., service-node-N) in the chain receives the packet (block 665), it pops the label (block 670), identifies the flow (block 675), and applies its service (block 680). The last service node then forwards the packet out of the SR domain and towards the subscriber device 210 (block 685).

In this example, the Internet gateway acts as the SR ingress and service-node-N acts as the SR egress. The example uses SR to route the packet to the appropriate service nodes 220. However, it should be understood that this is by way of example, and not intended to be limiting. Different embodiments may use a different routing/overlay technology (e.g., NSH).

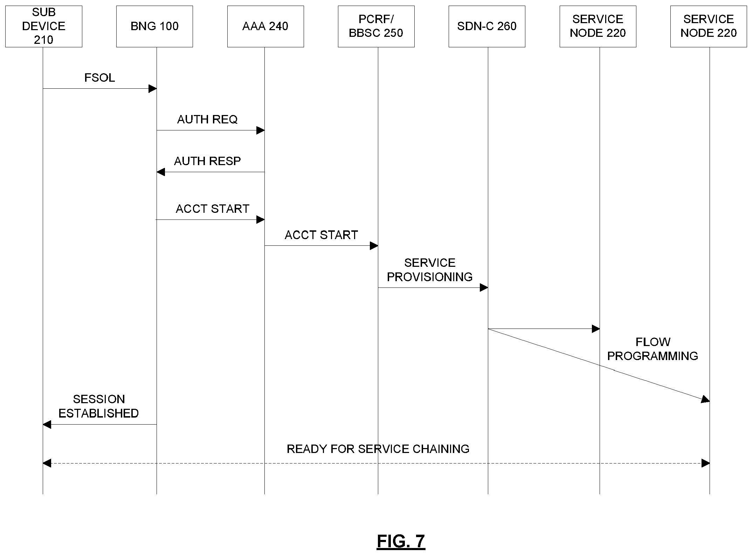

Fig. 7 is a timing diagram illustrating session establishment for dynamic service chaining, according to some embodiments. The subscriber device 210 transmits a first sign of life (FSOL) packet to the BNG 100 to request access to the service provider's network 200 (where the BNG 100 serves as the gateway to the service provider's network 200). In response, the BNG 100 transmits an AUTH_REQ message to the AAA server 240 to authenticate the subscriber. If the subscriber is successfully authenticated, the AAA server 240 may respond by transmitting an AUTH_RESP message to the BNG 100. The AUTH_RESP message may include a subscriber record for the subscriber and this subscriber record may include information pertaining to a service chain associated with the subscriber. The BNG 100 may generate (and store) a routing header (e.g., SR header) to be added to packets belonging to the subscriber based on the information received from the AAA server 240. This routing header may include an indication of the service chain associated with the subscriber. The BNG 100 may then configure the subscriber circuit for the subscriber to add the routing header to packets belonging to the subscriber.

The BNG 100 may then transmit an ACCT_START message to the AAA server 240 to start accounting for the subscriber. In response, the AAA server 240 transmits an ACCT_START message to the PCRF 250 (or broadband service controller (BBSC)).
The PCRF/BBSC 250 then causes the SDN controller (SDN-C) 260 to program the service nodes 220 with the various service parameters related to the respective services of the service chain associated with the subscriber (e.g., remaining data volume (for enforcing volume limit) or list of barred sites (for parental control)). The BNG 100 then indicates to the subscriber device 210 that the session is established. The service chain is now configured for the subscriber. When the subscriber device 210 subsequently transmits a data packet, the BNG 100 adds the appropriate routing header to the data packet and forwards the data packet along the service chain associated with the subscriber (e.g., to the appropriate service nodes 220 that apply the services of the service chain).

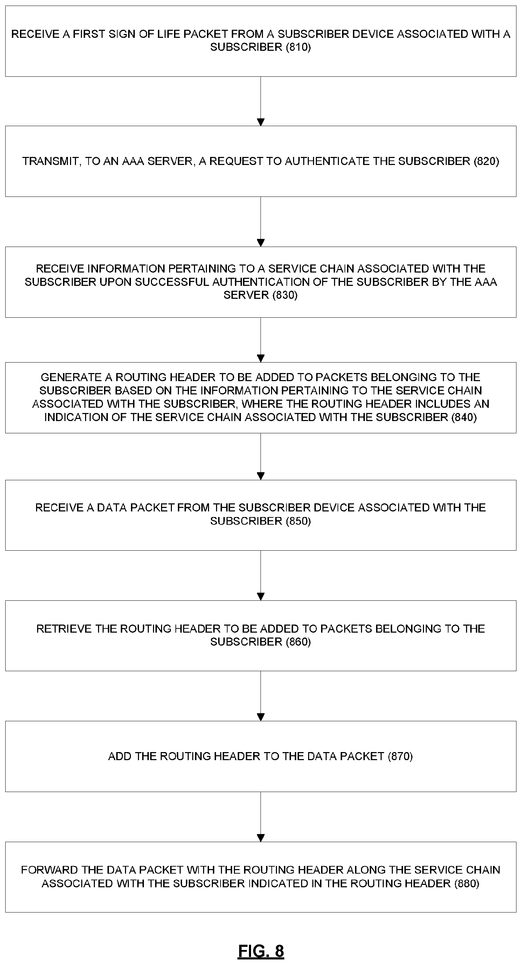

Fig. 8 is a flow diagram of a process for implementing dynamic service chaining for subscribers, according to some embodiments. In one embodiment, the process is performed by a network device functioning as a BNG 100. The operations in this and other flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

In one embodiment, the process is initiated when the BNG 100 receives a first sign of life packet from a subscriber device 210 associated with a subscriber (block 810). The first sign of life packet may be, for example, a DHCP Discover packet, a PADI packet, a DHCPv6 solicit message, or even a first data packet. In response to receiving the first sign of life packet, the BNG 100 transmits, to an AAA server 240, a request to authenticate the subscriber (block 820). Subsequently, if the AAA server 240 successfully authenticates the subscriber, the BNG 100 receives information pertaining to a service chain associated with the subscriber (block 830). The service chain associated with the subscriber defines an ordered set of one or more services to be applied. In one embodiment, the ordered set of one or more services includes a volume limit service, a minimum bandwidth guarantee service, and/or a deep packet inspection service. The information pertaining to the service chain associated with the subscriber may include a stack of SR labels, a service path identifier, an ordered list of services, or any other type of information that conveys the service chain associated with the subscriber. In one embodiment, the information pertaining to the service chain associated with the subscriber is received from the AAA server 240 or an SDN controller 260. The BNG 100 then generates (and stores) a routing header to be added to packets belonging to the subscriber based on the information pertaining to the service chain associated with the subscriber, where the routing header includes an indication of the service chain associated with the subscriber (block 840). In one embodiment, the routing header is an SR header and the indication of the service associated with the subscriber includes a stack of one or more SR labels. In another embodiment, the routing header is an NSH and the indication of the service chain associated with the subscriber includes a service path identifier.

In one embodiment, once the BNG 100 provisions the subscriber, the BNG 100 transmits an accounting start message to the AAA server 240, where the accounting start message causes the AAA server 240 to cause a PCRF 250 to provision service parameters related to one or more services of the service chain associated with the subscriber to one or more network devices that apply the one or more services. In one embodiment, the provisioning of the service parameters by the PCRF 250 includes provisioning an Internet gateway with information pertaining to a downstream service chain associated with the subscriber. In response, the Internet Gateway may generate a second routing header based on this information, where the second routing header includes an indication of the downstream service chain associated with the subscriber. The Internet Gateway may then configure its FIB to add the second routing header to packets destined for the subscriber device associated with the subscriber.

The BNG 100 may then receive a data packet from the subscriber device associated with the subscriber (block 850). The BNG 100 may identify that the data packet belongs to the subscriber based on any one of a source IP address indicated in the data packet, a source MAC address indicated in the data packet, and a session identifier (ID). The BNG 100 then retrieves the routing header to be added to packets belonging to the subscriber (block 860) and adds the routing header to the data packet (block 870). The BNG 100 then forwards the data packet with the routing header along the service chain associated with the subscriber indicated in the routing header (block 880).

In one embodiment, the BNG 100 reauthorizes the subscriber to receive updated information pertaining to the service chain associated with the subscriber (or the downstream service chain associated with the subscriber) in response to a determination that a change of authorization has occurred for the subscriber.

An advantage of embodiments disclosed herein is that services can be dynamically changed and provided in a more granular manner. Also, embodiments disclosed herein provide the flexibility to choose different services to be applied to upstream traffic and downstream traffic. Another advantage of embodiments disclosed herein is that services are distributed across multiple servicing nodes 220 within a data center 230. This may allow for the virtualization of services. Some services may be provided in a cloud while other may be on bare metal. Yet another advantage of embodiments disclosed herein is that it offers a simple way to dynamically provide services to subscribers. The service chain for a subscriber is determined when the subscriber session is created and can subsequently be reauthorized with a new service chain. Also, service chaining can be achieved without having to do hop-by-hop reclassification of packets. Furthermore, new services can be introduced without disrupting existing subscriber sessions. Embodiments disclosed herein can also be leveraged in the next generation emerging architectures such as Central Office Re-architected as Datacenter (CORD). Other advantages will be apparent one of ordinary skill in the art from the disclosure provided herein.

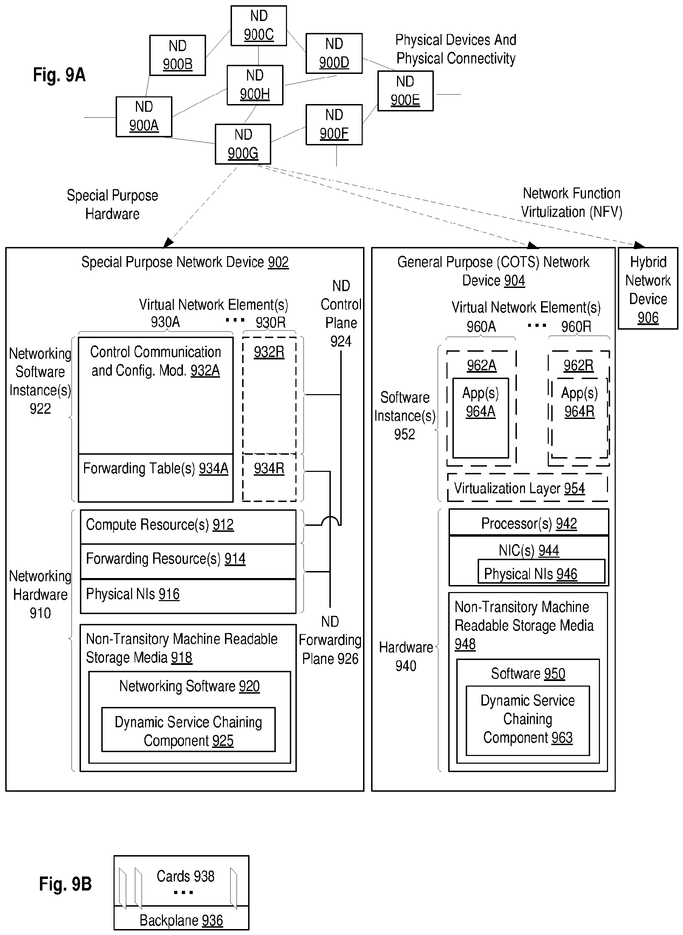

Two of the exemplary ND implementations in Figure 9A are: 1) a special-purpose network device 902 that uses custom application-specific integrated-circuits (ASICs) and a special-purpose operating system (OS); and 2) a general purpose network device 904 that uses common off-the-shelf (COTS) processors and a standard OS.

The special-purpose network device 902 includes networking hardware 910 comprising a set of one or more processor(s) 912, forwarding resource(s) 914 (which typically include one or more ASICs and/or network processors), and physical network interfaces (NIs) 916 (through which network connections are made, such as those shown by the connectivity between NDs 900A-H), as well as non-transitory machine readable storage media 918 having stored therein networking software 920. During operation, the networking software 920 may be executed by the networking hardware 910 to instantiate a set of one or more networking software instance(s) 922. Each of the networking software instance(s) 922, and that part of the networking hardware 910 that executes that network software instance (be it hardware dedicated to that networking software instance and/or time slices of hardware temporally shared by that networking software instance with others of the networking software instance(s) 922), form a separate virtual network element 930A-R. Each of the virtual network element(s)
(VNEs) 930A-R includes a control communication and configuration module 932A-R (sometimes referred to as a local control module or control communication module) and forwarding table(s) 934A-R, such that a given virtual network element (e.g., 930A) includes the control communication and configuration module (e.g., 932A), a set of one or more forwarding table(s) (e.g., 934A), and that portion of the networking hardware 910 that executes the virtual network element (e.g., 930A).

Software 920 can include code such as dynamic service chaining component 925, which when executed by networking hardware 910, causes the special-purpose network device 902 to perform operations of one or more embodiments of the present invention as part networking software instances 922.

The special-purpose network device 902 is often physically and/or logically considered to include: 1) a ND control plane 924 (sometimes referred to as a control plane) comprising the processor(s) 912 that execute the control communication and configuration module(s) 932A-R; and 2) a ND forwarding plane 926 (sometimes referred to as a forwarding plane, a data plane, or a media plane) comprising the forwarding resource(s) 914 that utilize the forwarding
table(s) 934A-R and the physical NIs 916. By way of example, where the ND is a router (or is implementing routing functionality), the ND control plane 924 (the processor(s) 912 executing the control communication and configuration module(s) 932A-R) is typically responsible for participating in controlling how data (e.g., packets) is to be routed (e.g., the next hop for the data and the outgoing physical NI for that data) and storing that routing information in the forwarding table(s) 934A-R, and the ND forwarding plane 926 is responsible for receiving that data on the physical NIs 916 and forwarding that data out the appropriate ones of the physical NIs 916 based on the forwarding table(s) 934A-R.

Figure 9B illustrates an exemplary way to implement the special-purpose network device 902 according to some embodiments. Figure 9B shows a special-purpose network device including cards 938 (typically hot pluggable). While in some embodiments the cards 938 are of two types (one or more that operate as the ND forwarding plane 926 (sometimes called line cards), and one or more that operate to implement the ND control plane 924 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 936 (e.g., a first full mesh coupling the line cards and a second full mesh coupling all of the cards).

Returning to Figure 9A, the general purpose network device 904 includes hardware 940 comprising a set of one or more processor(s) 942 (which are often COTS processors) and physical NIs 946, as well as non-transitory machine readable storage media 948 having stored therein software 950. During operation, the processor(s) 942 execute the software 950 to instantiate one or more sets of one or more applications 964A-R. While one embodiment does not implement virtualization, alternative embodiments may use different forms of virtualization. For example, in one such alternative embodiment the virtualization layer 954 represents the kernel of an operating system (or a shim executing on a base operating system) that allows for the creation of multiple instances 962A-R called software containers that may each be used to execute one (or more) of the sets of applications 964A-R; where the multiple software containers (also called virtualization engines, virtual private servers, or jails) are user spaces (typically a virtual memory space) that are separate from each other and separate from the kernel space in which the operating system is run; and where the set of applications running in a given user space, unless explicitly allowed, cannot access the memory of the other processes. In another such alternative embodiment the virtualization layer 954 represents a hypervisor (sometimes referred to as a virtual machine monitor (VMM)) or a hypervisor executing on top of a host operating system, and each of the sets of applications 964A-R is run on top of a guest operating system within an instance 962A-R called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In yet other alternative embodiments, one, some or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 940, directly on a hypervisor (in which case the unikernel is sometimes described as running within a LibOS virtual machine), or in a software container, embodiments can be implemented fully with unikernels running directly on a hypervisor represented by virtualization layer 954, unikernels running within software containers represented by instances 962A-R, or as a combination of unikernels and the above-described techniques (e.g., unikernels and virtual machines both run directly on a hypervisor, unikernels and sets of applications that are run in different software containers).

The instantiation of the one or more sets of one or more applications 964A-R, as well as virtualization if implemented, are collectively referred to as software instance(s) 952. Each set of applications 964A-R, corresponding virtualization construct (e.g., instance 962A-R) if implemented, and that part of the hardware 940 that executes them (be it hardware dedicated to that execution and/or time slices of hardware temporally shared), forms a separate virtual network element(s) 960A-R.

The virtual network element(s) 960A-R perform similar functionality to the virtual network element(s) 930A-R - e.g., similar to the control communication and configuration module(s) 932A and forwarding table(s) 934A (this virtualization of the hardware 940 is sometimes referred to as network function virtualization (NFV)). Thus, NFV may be used to consolidate many network equipment types onto industry standard high volume server hardware, physical switches, and physical storage, which could be located in Data centers, NDs, and customer premise equipment (CPE). While embodiments of the invention are illustrated with each instance 962A-R corresponding to one VNE 960A-R, alternative embodiments may implement this correspondence at a finer level granularity (e.g., line card virtual machines virtualize line cards, control card virtual machine virtualize control cards, etc.); it should be understood that the techniques described herein with reference to a correspondence of instances 962A-R to VNEs also apply to embodiments where such a finer level of granularity and/or unikernels are used.

In certain embodiments, the virtualization layer 954 includes a virtual switch that provides similar forwarding services as a physical Ethernet switch. Specifically, this virtual switch forwards traffic between instances 962A-R and the physical NI(s) 946, as well as optionally between the instances 962A-R; in addition, this virtual switch may enforce network isolation between the VNEs 960A-R that by policy are not permitted to communicate with each other (e.g., by honoring virtual local area networks (VLANs)).

Software 950 can include code such as dynamic service chaining component 963, which when executed by processor(s) 942, cause the general purpose network device 904 to perform operations of one or more embodiments of the present invention as part software instances 962A-R.

The third exemplary ND implementation in Figure 9A is a hybrid network device 906, which includes both custom ASICs/special-purpose OS and COTS processors/standard OS in a single ND or a single card within an ND. In certain embodiments of such a hybrid network device, a platform VM (i.e., a VM that that implements the functionality of the special-purpose network device 902) could provide for para-virtualization to the networking hardware present in the hybrid network device 906.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also in all of the above exemplary implementations, each of the VNEs (e.g., VNE(s) 930A-R, VNEs 960A-R, and those in the hybrid network device 906) receives data on the physical NIs (e.g., 916, 946) and forwards that data out the appropriate ones of the physical NIs (e.g., 916, 946). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP), Transmission Control Protocol (TCP), and differentiated services code point (DSCP) values.

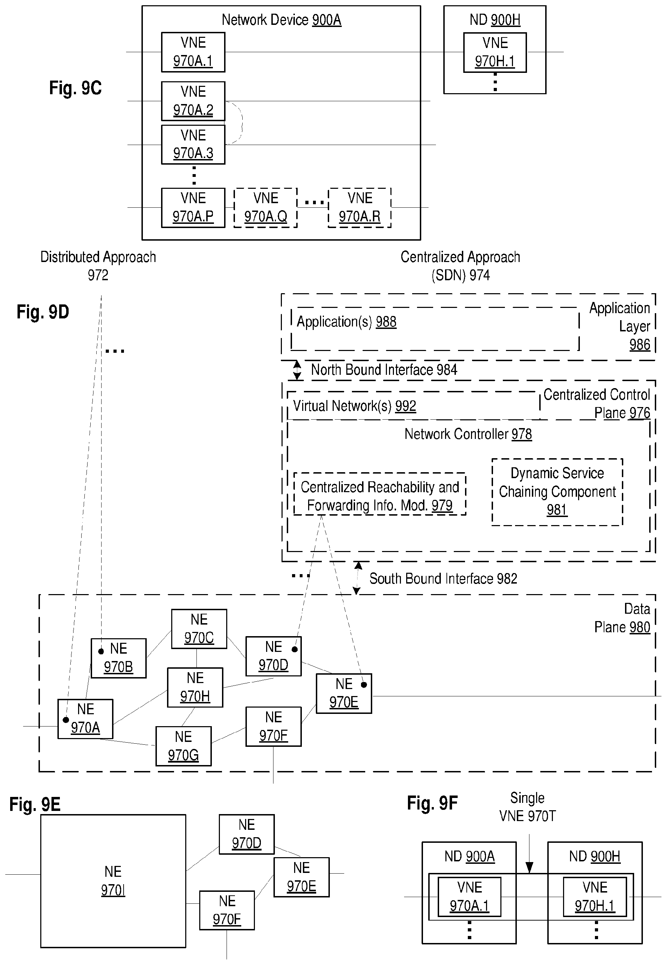

Figure 9C illustrates various exemplary ways in which VNEs may be coupled according to some embodiments. Figure 9C shows VNEs 970A.1-970A.P (and optionally VNEs 970A.Q-970A.R) implemented in ND 900A and VNE 970H.1 in ND 900H. In
Figure 9C, VNEs 970A.1-P are separate from each other in the sense that they can receive packets from outside ND 900A and forward packets outside of ND 900A; VNE 970A.1 is coupled with VNE 970H.1, and thus they communicate packets between their respective NDs; VNE 970A.2-970A.3 may optionally forward packets between themselves without forwarding them outside of the ND 900A; and VNE 970A.P may optionally be the first in a chain of VNEs that includes VNE 970A.Q followed by VNE 970A.R (this is sometimes referred to as dynamic service chaining, where each of the VNEs in the series of VNEs provides a different service - e.g., one or more layer 4-7 network services). While Figure 9C illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure 9A, for example, may form part of the Internet or a private network; and other electronic devices (not shown; such as end user devices including workstations, laptops, netbooks, tablets, palm tops, mobile phones, smartphones, phablets, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in Figure 9A may also host one or more such servers (e.g., in the case of the general purpose network device 904, one or more of the software instances 962A-R may operate as servers; the same would be true for the hybrid network device 906; in the case of the special-purpose network device 902, one or more such servers could also be run on a virtualization layer executed by the processor(s) 912); in which case the servers are said to be co-located with the VNEs of that ND.

A virtual network is a logical abstraction of a physical network (such as that in Figure 9A) that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

Fig. 9D illustrates a network with a single network element on each of the NDs of Figure 9A, and within this straight forward approach contrasts a traditional distributed approach (commonly used by traditional routers) with a centralized approach for maintaining reachability and forwarding information (also called network control), according to some embodiments. Specifically, Figure 9D illustrates network elements (NEs) 970A-H with the same connectivity as the NDs 900A-H of Figure 9A.

Figure 9D illustrates that the distributed approach 972 distributes responsibility for generating the reachability and forwarding information across the NEs 970A-H; in other words, the process of neighbor discovery and topology discovery is distributed.

For example, where the special-purpose network device 902 is used, the control communication and configuration module(s) 932A-R of the ND control plane 924 typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs 970A-H (e.g., the processor(s) 912 executing the control communication and configuration module(s) 932A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 924. The ND control plane 924 programs the ND forwarding plane 926 with information (e.g., adjacency and route information) based on the routing structure(s). For example, the ND control plane 924 programs the adjacency and route information into one or more forwarding table(s) 934A-R (e.g., Forwarding Information Base (FIB), Label Forwarding Information Base (LFIB), and one or more adjacency structures) on the ND forwarding plane 926. For layer 2 forwarding, the ND can store one or more bridging tables that are used to forward data based on the layer 2 information in that data. While the above example uses the special-purpose network device 902, the same distributed approach 972 can be implemented on the general purpose network device 904 and the hybrid network device 906.

Figure 9D illustrates that a centralized approach 974 (also known as software defined networking (SDN)) that decouples the system that makes decisions about where traffic is sent from the underlying systems that forwards traffic to the selected destination. The illustrated centralized approach 974 has the responsibility for the generation of reachability and forwarding information in a centralized control plane 976 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 976 has a south bound interface 982 with a data plane 980 (sometime referred to the infrastructure layer, network forwarding plane, or forwarding plane (which should not be confused with a ND forwarding plane)) that includes the NEs 970A-H (sometimes referred to as switches, forwarding elements, data plane elements, or nodes). The centralized control plane 976 includes a network controller 978, which includes a centralized reachability and forwarding information module 979 that determines the reachability within the network and distributes the forwarding information to the NEs 970A-H of the data plane 980 over the south bound interface 982 (which may use the OpenFlow protocol). Thus, the network intelligence is centralized in the centralized control plane 976 executing on electronic devices that are typically separate from the NDs. In one embodiment, the network controller 978 may include a dynamic service chaining component 981 that when executed by the network controller 978, causes the network controller 978 to perform operations of one or more embodiments described herein above.

For example, where the special-purpose network device 902 is used in the data plane 980, each of the control communication and configuration module(s) 932A-R of the ND control plane 924 typically include a control agent that provides the VNE side of the south bound interface 982. In this case, the ND control plane 924 (the processor(s) 912 executing the control communication and configuration module(s) 932A-R) performs its responsibility for participating in controlling how data (e.g., packets) is to be routed (e.g., the next hop for the data and the outgoing physical NI for that data) through the control agent communicating with the centralized control plane 976 to receive the forwarding information (and in some cases, the reachability information) from the centralized reachability and forwarding information module 979 (it should be understood that in some embodiments, the control communication and configuration module(s) 932A-R, in addition to communicating with the centralized control plane 976, may also play some role in determining reachability and/or calculating forwarding information - albeit less so than in the case of a distributed approach; such embodiments are generally considered to fall under the centralized approach 974, but may also be considered a hybrid approach).

While the above example uses the special-purpose network device 902, the same centralized approach 974 can be implemented with the general purpose network device 904 (e.g., each of the VNE 960A-R performs its responsibility for controlling how data (e.g., packets) is to be routed (e.g., the next hop for the data and the outgoing physical NI for that data) by communicating with the centralized control plane 976 to receive the forwarding information (and in some cases, the reachability information) from the centralized reachability and forwarding information module 979; it should be understood that in some embodiments, the VNEs 960A-R, in addition to communicating with the centralized control plane 976, may also play some role in determining reachability and/or calculating forwarding information - albeit less so than in the case of a distributed approach) and the hybrid network device 906. In fact, the use of SDN techniques can enhance the NFV techniques typically used in the general purpose network device 904 or hybrid network device 906 implementations as NFV is able to support SDN by providing an infrastructure upon which the SDN software can be run, and NFV and SDN both aim to make use of commodity server hardware and physical switches.

Figure 9D also shows that the centralized control plane 976 has a north bound interface 984 to an application layer 986, in which resides application(s) 988. The centralized control plane 976 has the ability to form virtual networks 992 (sometimes referred to as a logical forwarding plane, network services, or overlay networks (with the NEs 970A-H of the data plane 980 being the underlay network)) for the application(s) 988. Thus, the centralized control plane 976 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While Figure 9D shows the distributed approach 972 separate from the centralized approach 974, the effort of network control may be distributed differently or the two combined in certain embodiments of the invention. For example: 1) embodiments may generally use the centralized approach (SDN) 974, but have certain functions delegated to the NEs (e.g., the distributed approach may be used to implement one or more of fault monitoring, performance monitoring, protection switching, and primitives for neighbor and/or topology discovery); or 2) embodiments of the invention may perform neighbor discovery and topology discovery via both the centralized control plane and the distributed protocols, and the results compared to raise exceptions where they do not agree. Such embodiments are generally considered to fall under the centralized approach 974, but may also be considered a hybrid approach.

While Figure 9D illustrates the simple case where each of the NDs 900A-H implements a single NE 970A-H, it should be understood that the network control approaches described with reference to Figure 9D also work for networks where one or more of the NDs 900A-H implement multiple VNEs (e.g., VNEs 930A-R, VNEs 960A-R, those in the hybrid network device 906). Alternatively or in addition, the network controller 978 may also emulate the implementation of multiple VNEs in a single ND. Specifically, instead of (or in addition to) implementing multiple VNEs in a single ND, the network controller 978 may present the implementation of a VNE/NE in a single ND as multiple VNEs in the virtual networks 992 (all in the same one of the virtual network(s) 992, each in different ones of the virtual network(s) 992, or some combination). For example, the network controller 978 may cause an ND to implement a single VNE (a NE) in the underlay network, and then logically divide up the resources of that NE within the centralized control plane 976 to present different VNEs in the virtual network(s) 992 (where these different VNEs in the overlay networks are sharing the resources of the single VNE/NE implementation on the ND in the underlay network).

On the other hand, Figures 9E and 9F respectively illustrate exemplary abstractions of NEs and VNEs that the network controller 978 may present as part of different ones of the virtual networks 992. Figure 9E illustrates the simple case of where each of the NDs 900A-H implements a single NE 970A-H (see Figure 9D), but the centralized control plane 976 has abstracted multiple of the NEs in different NDs (the NEs 970A-C and G-H) into (to represent) a single NE 9701 in one of the virtual network(s) 992 of Figure 9D, according to some embodiments. Figure 9E shows that in this virtual network, the NE 9701 is coupled to NE 970D and 970F, which are both still coupled to NE 970E.

Figure 9F illustrates a case where multiple VNEs (VNE 970A.1 and VNE 970H.1) are implemented on different NDs (ND 900A and ND 900H) and are coupled to each other, and where the centralized control plane 976 has abstracted these multiple VNEs such that they appear as a single VNE 970T within one of the virtual networks 992 of Figure 9D, according to some embodiments. Thus, the abstraction of a NE or VNE can span multiple NDs.

While some embodiments implement the centralized control plane 976 as a single entity (e.g., a single instance of software running on a single electronic device), alternative embodiments may spread the functionality across multiple entities for redundancy and/or scalability purposes (e.g., multiple instances of software running on different electronic devices).

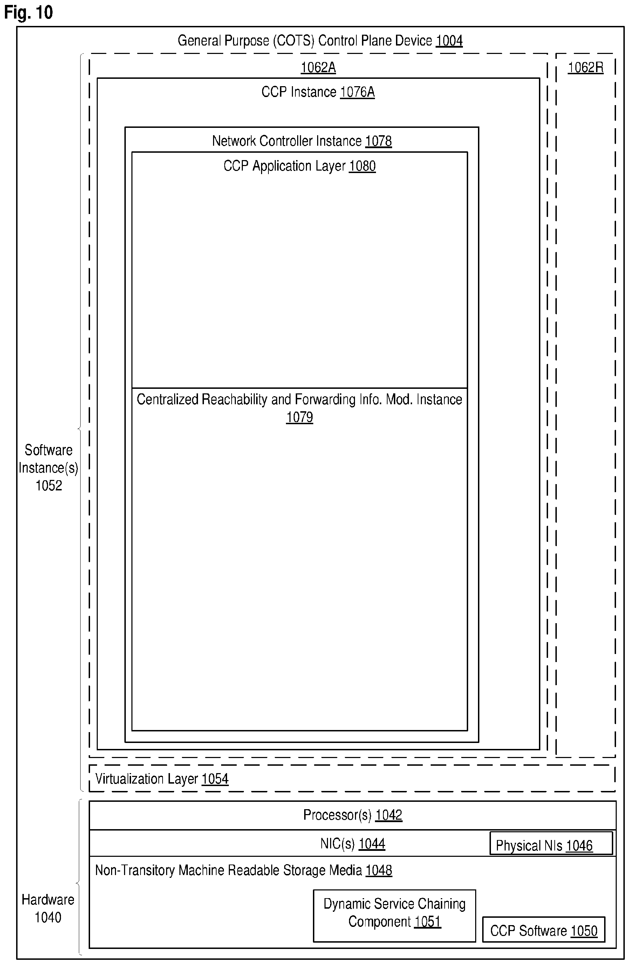

Similar to the network device implementations, the electronic device(s) running the centralized control plane 976, and thus the network controller 978 including the centralized reachability and forwarding information module 979, may be implemented a variety of ways (e.g., a special purpose device, a general-purpose (e.g., COTS) device, or hybrid device). These electronic device(s) would similarly include processor(s), a set or one or more physical NIs, and a non-transitory machine-readable storage medium having stored thereon the centralized control plane software. For instance, Figure 10 illustrates, a general purpose control plane device 1004 including hardware 1040 comprising a set of one or more processor(s) 1042 (which are often COTS processors) and physical NIs 1046, as well as non-transitory machine readable storage media 1048 having stored therein centralized control plane (CCP) software 1050 and a dynamic service chaining component 1051.

In embodiments that use compute virtualization, the processor(s) 1042 typically execute software to instantiate a virtualization layer 1054 (e.g., in one embodiment the virtualization layer 1054 represents the kernel of an operating system (or a shim executing on a base operating system) that allows for the creation of multiple instances 1062A-R called software containers (representing separate user spaces and also called virtualization engines, virtual private servers, or jails) that may each be used to execute a set of one or more applications; in another embodiment the virtualization layer 1054 represents a hypervisor (sometimes referred to as a virtual machine monitor (VMM)) or a hypervisor executing on top of a host operating system, and an application is run on top of a guest operating system within an instance 1062A-R called a virtual machine (which in some cases may be considered a tightly isolated form of software container) that is run by the hypervisor ; in another embodiment, an application is implemented as a unikernel, which can be generated by compiling directly with an application only a limited set of libraries (e.g., from a library operating system (LibOS) including drivers/libraries of OS services) that provide the particular OS services needed by the application, and the unikernel can run directly on hardware 1040, directly on a hypervisor represented by virtualization layer 1054 (in which case the unikernel is sometimes described as running within a LibOS virtual machine), or in a software container represented by one of instances 1062A-R). Again, in embodiments where compute virtualization is used, during operation an instance of the CCP software 1050 (illustrated as CCP instance 1076A) is executed (e.g., within the instance 1062A) on the virtualization layer 1054. In embodiments where compute virtualization is not used, the CCP instance 1076A is executed, as a unikernel or on top of a host operating system, on the "bare metal" general purpose control plane device 1004. The instantiation of the CCP instance 1076A, as well as the virtualization layer 1054 and instances 1062A-R if implemented, are collectively referred to as software instance(s) 1052.

In some embodiments, the CCP instance 1076A includes a network controller instance 1078. The network controller instance 1078 includes a centralized reachability and forwarding information module instance 1079 (which is a middleware layer providing the context of the network controller 978 to the operating system and communicating with the various NEs), and an CCP application layer 1080 (sometimes referred to as an application layer) over the middleware layer (providing the intelligence required for various network operations such as protocols, network situational awareness, and user - interfaces). At a more abstract level, this CCP application layer 1080 within the centralized control plane 976 works with virtual network view(s) (logical view(s) of the network) and the middleware layer provides the conversion from the virtual networks to the physical view.

The dynamic service chaining component 1051 can be executed by hardware 1040 to perform operations of one or more embodiments of the present invention as part of software instances 1052.

The centralized control plane 976 transmits relevant messages to the data plane 980 based on CCP application layer 1080 calculations and middleware layer mapping for each flow. A flow may be defined as a set of packets whose headers match a given pattern of bits; in this sense, traditional IP forwarding is also flow-based forwarding where the flows are defined by the destination IP address for example; however, in other implementations, the given pattern of bits used for a flow definition may include more fields (e.g., 10 or more) in the packet headers. Different NDs/NEs/VNEs of the data plane 980 may receive different messages, and thus different forwarding information. The data plane 980 processes these messages and programs the appropriate flow information and corresponding actions in the forwarding tables (sometime referred to as flow tables) of the appropriate NE/VNEs, and then the NEs/VNEs map incoming packets to flows represented in the forwarding tables and forward packets based on the matches in the forwarding tables.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 980, the packet (or a subset of the packet header and content) is typically forwarded to the centralized control plane 976. The centralized control plane 976 will then program forwarding table entries into the data plane 980 to accommodate packets belonging to the flow of the unknown packet. Once a specific forwarding table entry has been programmed into the data plane 980 by the centralized control plane 976, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes; where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

Some NDs include functionality for authentication, authorization, and accounting (AAA) protocols (e.g., RADIUS (Remote Authentication Dial-In User Service), Diameter, and/or TACACS+ (Terminal Access Controller Access Control System Plus). AAA can be provided through a client/server model, where the AAA client is implemented on a ND and the AAA server can be implemented either locally on the ND or on a remote electronic device coupled with the ND. Authentication is the process of identifying and verifying a subscriber. For instance, a subscriber might be identified by a combination of a username and a password or through a unique key. Authorization determines what a subscriber can do after being authenticated, such as gaining access to certain electronic device information resources (e.g., through the use of access control policies). Accounting is recording user activity. By way of a summary example, end user devices may be coupled (e.g., through an access network) through an edge ND (supporting AAA processing) coupled to core NDs coupled to electronic devices implementing servers of service/content providers. AAA processing is performed to identify for a subscriber the subscriber record stored in the AAA server for that subscriber. A subscriber record includes a set of attributes (e.g., subscriber name, password, authentication information, access control information, rate-limiting information, policing information) used during processing of that subscriber's traffic.

Certain NDs (e.g., certain edge NDs) internally represent end user devices (or sometimes customer premise equipment (CPE) such as a residential gateway (e.g., a router, modem)) using subscriber circuits. A subscriber circuit uniquely identifies within the ND a subscriber session and typically exists for the lifetime of the session. Thus, a ND typically allocates a subscriber circuit when the subscriber connects to that ND, and correspondingly de-allocates that subscriber circuit when that subscriber disconnects. Each subscriber session represents a distinguishable flow of packets communicated between the ND and an end user device (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for digital subscriber line (DSL) services and requires installation of a PPP client that enables the subscriber to enter a username and a password, which in turn may be used to select a subscriber record. When DHCP is used (e.g., for cable modem services), a username typically is not provided; but in such situations other information (e.g., information that includes the MAC address of the hardware in the end user device (or CPE)) is provided. The use of DHCP and CLIPS on the ND captures the MAC addresses and uses these addresses to distinguish subscribers and access their subscriber records.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the scope of the appended claims. The description is thus to be regarded as illustrative instead of limiting.

## Claims

1. A method performed by a network device functioning as a Broadband Network Gateway, BNG, for enabling dynamic service chaining for subscribers, the method comprising:
receiving (810) a first sign of life packet from a subscriber device associated with a subscriber;
transmitting (820), to an authentication, authorization, and accounting, AAA, server, a request to authenticate the subscriber in response to receiving the first sign of life packet from the subscriber device associated with the subscriber;
receiving (830) information pertaining to a service chain associated with the subscriber upon successful authentication of the subscriber by the AAA server;
generating (840) a routing header to be added to packets belonging to the subscriber based on the information pertaining to the service chain associated with the subscriber, wherein the routing header includes an indication of the service chain associated with the subscriber;
receiving (850) a data packet from the subscriber device associated with a subscriber;
retrieving (860) the routing header to be added to packets belonging to the subscriber;
adding (870) the routing header to the data packet;
forwarding (880) the data packet with the routing header along the service chain associated with the subscriber indicated in the routing header;
reauthorizing the subscriber to receive updated information pertaining to the service chain associated with the subscriber in response to a determination that a change of authorization has occurred for the subscriber; and
dynamically re-provisioning the service chain based on the change of authorization.

2. The method of claim 1, wherein the information pertaining to the service chain associated with the subscriber is received from the AAA server or a software defined networking, SDN, controller.

3. The method of claim 1, wherein the routing header is a segment routing, SR, header, and wherein the indication of the service chain associated with the subscriber includes a stack of one or more SR labels.

4. The method of claim 1, wherein the routing header is a network service header, NSH, and wherein the indication of the service chain associated with the subscriber includes a service path identifier.

5. The method of claim 1, further comprising:
identifying the subscriber based on any one of a source Internet Protocol, IP, address indicated in the data packet, a source Media Access Control, MAC, address indicated in the packet, and a session identifier, ID.

6. The method of claim 1, further comprising:
transmitting, to an AAA server, an accounting start message, wherein the accounting start message causes the AAA server to cause a policy and charging rules function, PCRF, to provision service parameters related to one or more services of the service chain associated with the subscriber to one or more network devices that apply the one or more services of the service chain associated with the subscriber.

7. The method of claim 6, wherein the provisioning of the service parameters by the PCRF includes provisioning an Internet Gateway with information pertaining to a downstream service chain associated with the subscriber, wherein the Internet Gateway is to add a second routing header to packets destined for the subscriber device associated with the subscriber, wherein the second routing header includes an indication of the downstream service chain associated with the subscriber.

8. The method of claim 1, wherein the service chain associated with the subscriber defines an ordered set of one or more services, wherein the ordered set of one or more services includes any one of a volume limit service, a minimum bandwidth guarantee service, and a deep packet inspection service.

9. A network device (904) to function as a Broadband Network Gateway, BNG, (100) that enables dynamic service chaining for subscribers, the network device comprising:
a set of one or more processors (942); and
a non-transitory machine-readable storage medium (948) having stored therein a dynamic service chaining component (963), which when executed by the set of one or more processors, causes the network device to receive a first sign of life packet from a subscriber device associated with a subscriber, transmit, to an authentication, authorization, and accounting, AAA, server, a request to authenticate the subscriber in response to receiving the first sign of life packet from the subscriber device associated with the subscriber, receiving information pertaining to a service chain associated with the subscriber upon successful authentication of the subscriber by the AAA server, generate a routing header to be added to packets belonging to the subscriber based on the information pertaining to the service chain associated with the subscriber, wherein the routing header includes an indication of the service chain associated with the subscriber, receive a data packet from the subscriber device associated with a subscriber, retrieve the routing header to be added to packets belonging to the subscriber, add the routing header to the data packet, and forward the data packet with the routing header along the service chain associated with the subscriber indicated in the routing header, reauthorize the subscriber to receive updated information pertaining to the service chain associated with the subscriber in response to a determination that a change of authorization has occurred for the subscribe and dynamically re-provision the service chain based on the change of authorization.

10. The network device of claim9, wherein the information pertaining to the service chain associated with the subscriber is received from the AAA server or a software defined networking, SDN, controller.

11. The network device of claim 9, wherein the routing header is a segment routing, SR, header, and wherein the indication of the service chain associated with the subscriber includes a stack of one or more SR labels.

12. The network device of claim 9, wherein the routing header is a network service header, NSH, and wherein the indication of the service chain associated with the subscriber includes a service path identifier.

13. The network device of claim 9, wherein the dynamic service chaining component, when executed by the set of one or more processors, further causes the network device to transmit, to an AAA server, an accounting start message, wherein the accounting start message causes the AAA server to cause a policy and charging rules function, PCRF, to provision service parameters related to one or more services of the service chain associated with the subscriber to one or more network devices that apply the one or more services of the service chain associated with the subscriber.

14. The network device of claim 13, wherein the provisioning of the service parameters by the PCRF includes provisioning an Internet Gateway with information pertaining to a downstream service chain associated with the subscriber, wherein the Internet Gateway is to add a second routing header to packets destined for the subscriber device associated with the subscriber, wherein the second routing header includes an indication of the downstream service chain associated with the subscriber.

15. A non-transitory machine-readable medium having computer code stored therein, which when executed by a set of one or more processors of a network device functioning as a Broadband Network Gateway, BNG, causes the network device to perform operations for enabling dynamic service chaining for subscribers, the operations comprising:
receiving (810) a first sign of life packet from a subscriber device associated with a subscriber;
transmitting (820), to an authentication, authorization, and accounting, AAA, server, a request to authenticate the subscriber in response to receiving the first sign of life packet from the subscriber device associated with the subscriber;
receiving (830) information pertaining to a service chain associated with the subscriber upon successful authentication of the subscriber by the AAA server;
generating (840) a routing header to be added to packets belonging to the subscriber based on the information pertaining to the service chain associated with the subscriber, wherein the routing header includes an indication of the service chain associated with the subscriber;
receiving (850) a data packet from the subscriber device associated with a subscriber;
retrieving (860) the routing header to be added to packets belonging to the subscriber;
adding (870) the routing header to the data packet; and
forwarding (880) the data packet with the routing header along the service chain associated with the subscriber indicated in the routing header;
reauthorizing the subscriber to receive updated information pertaining to the service chain associated with the subscriber in response to a determination that a change of authorization has occurred for the subscriber; and
dynamically re-provisioning the service chain based on the change of authorization.

16. The non-transitory machine-readable medium of claim15, wherein the routing header is a segment routing, SR, header, and wherein the indication of the service chain associated with the subscriber includes a stack of one or more SR labels.

17. The non-transitory machine-readable medium of claim 15, wherein the routing header is a network service header, NSH, and wherein the indication of the service chain associated with the subscriber includes a service path identifier.

18. The non-transitory machine-readable medium of claim 15, wherein the service chain associated with the subscriber defines an ordered set of one or more services, wherein the ordered set of one or more services includes any one of a volume limit service, a minimum bandwidth guarantee service, and a deep packet inspection service.

## Patentansprüche

1. Verfahren, das von einer als Breitband-Netzwerk-Gateway, BNG, fungierenden Netzwerkvorrichtung durchgeführt wird, um dynamische Dienstverkettung für Teilnehmer zu ermöglichen, das Verfahren umfassend:
Empfangen (810) eines ersten Lebenszeichenpakets von einer Teilnehmervorrichtung, die einem Teilnehmer zugeordnet ist;
Übertragen (820) an einen Server für Authentifizierung, Autorisierung und Abrechnung, AAA, einer Anforderung zum Authentifizieren des Teilnehmers als Reaktion auf das Empfangen des ersten Lebenszeichenpakets von der Teilnehmervorrichtung, die dem Teilnehmer zugeordnet ist;
Empfangen (830) von Informationen bezüglich einer Dienstkette, die dem Teilnehmer bei erfolgreicher Authentifizierung des Teilnehmers durch den AAA-Server zugeordnet ist;
Erzeugen (840) eines Routing-Headers, der Paketen hinzuzufügen ist, die zu dem Teilnehmer gehören, basierend auf den Informationen bezüglich der Dienstkette, die dem Teilnehmer zugeordnet ist, wobei der Routing-Header eine Angabe der Dienstkette einschließt, die dem Teilnehmer zugeordnet ist;
Empfangen (850) eines Datenpakets von der Teilnehmervorrichtung, die einem Teilnehmer zugeordnet ist;
Abrufen (860) des Routing-Headers, der Paketen hinzuzufügen ist, die zu dem Teilnehmer gehören;
Hinzufügen (870) des Routing-Headers zu dem Datenpaket;
Weiterleiten (880) des Datenpakets mit dem Routing-Header entlang der Dienstkette, die dem in dem Routing-Header angegebenen Teilnehmer zugeordnet ist;
erneutes Autorisieren des Teilnehmers zum Empfangen aktualisierter Informationen bezüglich der Dienstkette, die dem Teilnehmer zugeordnet ist, als Reaktion auf eine Bestimmung, dass eine Änderung der Autorisierung für den Teilnehmer aufgetreten ist; und
dynamisches erneutes Bereitstellen der Dienstkette basierend auf der Änderung der Autorisierung.

2. Verfahren nach Anspruch 1, wobei die Informationen bezüglich der Dienstkette, die dem Teilnehmer zugeordnet ist, von dem AAA-Server oder einem Software-defined Networking Controller, SDN-Controller, empfangen werden.

3. Verfahren nach Anspruch 1, wobei der Routing-Header ein Segment-Routing-Header, SR-Header, ist und
wobei die Angabe der Dienstkette, die dem Teilnehmer zugeordnet ist, einen Stapel von einem oder mehreren SR-Labels einschließt.

4. Verfahren nach Anspruch 1, wobei der Routing-Header ein Netzwerkdienst-Header, NSH, ist und
wobei die Angabe der Dienstkette, die dem Teilnehmer zugeordnet ist, eine Dienstpfadkennung einschließt.

5. Verfahren nach Anspruch 1, ferner umfassend:
Identifizieren des Teilnehmers basierend auf einer beliebigen Quell-Internetprotokoll-Adresse, Quell-IP-Adresse,
die in dem Datenpaket angegeben ist, einer Quell-Media-Access-Control-Adresse, Quell-MAC-Adresse,
die in dem Paket angegeben ist, und einer Sitzungskennung, ID.

6. Verfahren nach Anspruch 1, ferner umfassend:
Übertragen an einen AAA-Server einer Abrechnungsstartnachricht, wobei die Abrechnungsstartnachricht den AAA-Server veranlasst, eine Richtlinien- und Gebührenregelfunktion, PCRF, zu veranlassen, Dienstparameter, die sich auf einen oder mehrere Dienste der Dienstkette beziehen, die dem Teilnehmer zugeordnet sind, einer oder mehreren Netzwerkvorrichtungen bereitzustellen, die den einen oder die mehreren Dienste der Dienstkette anwenden, die dem Teilnehmer zugeordnet sind.

7. Verfahren nach Anspruch 6, wobei das Bereitstellen der Dienstparameter durch die PCRF das Bereitstellen eines Internet-Gateways mit Informationen einschließt, die sich auf eine nachgelagerte Dienstkette beziehen, die dem Teilnehmer zugeordnet ist, wobei das Internet-Gateway einen zweiten Routing-Header zu Paketen hinzufügen soll, die für die Teilnehmervorrichtung bestimmt sind, die dem Teilnehmer zugeordnet ist, wobei der zweite Routing-Header eine Angabe der nachgelagerten Dienstkette einschließt, die dem Teilnehmer zugeordnet ist.

8. Verfahren nach Anspruch 1, wobei die Dienstkette, die dem Teilnehmer zugeordnet ist, einen geordneten Satz von einem oder mehreren Diensten definiert, wobei der geordnete Satz von einem oder mehreren Diensten einen beliebigen von einem Volumenbegrenzungsdienst, einem Dienst mit Mindestbandbreitengarantie und einem Deep Packet Inspection-Dienst einschließt.

9. Netzwerkvorrichtung (904) zum Funktionieren als ein Breitband-Netzwerk-Gateway, BNG, (100), das dynamische Dienstverkettung für Teilnehmer ermöglicht, die Netzwerkvorrichtung umfassend:
einen Satz von einem oder mehreren Prozessoren (942); und
ein nichtflüchtiges maschinenlesbares Speichermedium (948), auf dem eine dynamische Dienstverkettungskomponente (963) gespeichert ist, die beim Ausführen durch den Satz von einem oder mehreren Prozessoren die Netzwerkvorrichtung veranlasst zum Empfangen eines ersten Lebenszeichenpakets von einer Teilnehmervorrichtung, die einem Teilnehmer zugeordnet ist, Übertragen an einen Server für Authentifizierung, Autorisierung und Abrechnung, AAA-Server, eine Anforderung zum Authentifizieren des Teilnehmers als Reaktion auf das Empfangen des ersten Lebenszeichenpakets von der Teilnehmervorrichtung, die dem Teilnehmer zugeordnet ist, Empfangen von Informationen bezüglich einer Dienstkette, die dem Teilnehmer bei erfolgreicher Authentifizierung des Teilnehmers durch den AAA-Server zugeordnet ist, Erzeugen eines Routing-Headers, der Paketen hinzuzufügen ist, die zu dem Teilnehmer gehören, basierend auf den Informationen bezüglich der Dienstkette, die dem Teilnehmer zugeordnet ist, wobei der Routing-Header eine Angabe der Dienstkette einschließt, die dem Teilnehmer zugeordnet ist, Empfangen eines Datenpakets von der Teilnehmervorrichtung, die einem Teilnehmer zugeordnet ist, Abrufen des Routing-Headers, der Paketen hinzuzufügen ist, die zu dem Teilnehmer gehören, Hinzufügen des Routing-Headers zu dem Datenpaket, und Weiterleiten des Datenpakets mit dem Routing-Header entlang der Dienstkette, die dem in dem Routing-Header angegebenen Teilnehmer zugeordnet ist, erneuten Autorisieren des Teilnehmers zum Empfangen aktualisierter Informationen bezüglich der Dienstkette, die dem Teilnehmer zugeordnet ist, als Reaktion auf eine Bestimmung, dass eine Änderung der Autorisierung für den Teilnehmer aufgetreten ist und dynamischen erneuten Bereitstellen der Dienstkette basierend auf der Änderung der Autorisierung.

10. Netzwerkvorrichtung nach Anspruch 9, wobei die Informationen bezüglich der Dienstkette, die dem Teilnehmer zugeordnet ist, von dem AAA-Server oder einem Software-defined Networking Controller, SDN-Controller, empfangen werden.

11. Netzwerkvorrichtung nach Anspruch 9, wobei der Routing-Header ein Segment-Routing-Header, SR-Header, ist,
und wobei die Angabe der Dienstkette, die dem Teilnehmer zugeordnet ist, einen Stapel von einem oder mehreren SR-Labels einschließt.

12. Netzwerkvorrichtung nach Anspruch 9, wobei der Routing-Header ein Netzwerkdienst-Header, NSH, ist und wobei die Angabe der Dienstkette, die dem Teilnehmer zugeordnet ist, eine Dienstpfadkennung einschließt.

13. Netzwerkvorrichtung nach Anspruch 9, wobei die dynamische Dienstverkettungskomponente, wenn sie durch den Satz von einem oder mehreren Prozessoren ausgeführt wird, ferner die Netzwerkvorrichtung veranlasst zum Übertragen an einen AAA-Server einer Abrechnungsstartnachricht, wobei die Abrechnungsstartnachricht den AAA-Server veranlasst, eine Richtlinien- und Gebührenregelfunktion, PCRF, zu veranlassen, Dienstparameter, die sich auf einen oder mehrere Dienste der Dienstkette beziehen, die dem Teilnehmer zugeordnet sind, einer oder mehreren Netzwerkvorrichtungen bereitzustellen, die den einen oder die mehreren Dienste der Dienstkette anwenden, die dem Teilnehmer zugeordnet sind.

14. Netzwerkvorrichtung nach Anspruch 13, wobei das Bereitstellen der Dienstparameter durch die PCRF das Bereitstellen eines Internet-Gateways mit Informationen einschließt, die sich auf eine nachgelagerte Dienstkette beziehen, die dem Teilnehmer zugeordnet ist, wobei das Internet-Gateway einen zweiten Routing-Header zu Paketen hinzufügen soll, die für die Teilnehmervorrichtung bestimmt sind, die dem Teilnehmer zugeordnet ist, wobei der zweite Routing-Header eine Angabe der nachgelagerten Dienstkette einschließt, die dem Teilnehmer zugeordnet ist.

15. Nichtflüchtiges maschinenlesbares Medium mit darin gespeichertem Computercode, der bei Ausführung durch einen Satz von einem oder mehreren Prozessoren einer Netzwerkvorrichtung, die als Breitband-Netzwerk-Gateway, BNG, fungiert, die Netzwerkvorrichtung veranlasst, Operationen zur Ermöglichung einer dynamischen Dienstverkettung für Teilnehmer durchzuführen, die Operationen umfassend:
Empfangen (810) eines ersten Lebenszeichenpakets von einer Teilnehmervorrichtung, die einem Teilnehmer zugeordnet ist;
Übertragen (820) an einen Server für Authentifizierung, Autorisierung und Abrechnung, AAA-Server, einer Anforderung zum Authentifizieren des Teilnehmers als Reaktion auf das Empfangen des ersten Lebenszeichenpakets von der Teilnehmervorrichtung, die dem Teilnehmer zugeordnet ist;
Empfangen (830) von Informationen bezüglich einer Dienstkette, die dem Teilnehmer bei erfolgreicher Authentifizierung des Teilnehmers durch den AAA-Server zugeordnet ist;
Erzeugen (840) eines Routing-Headers, der Paketen hinzuzufügen ist, die zu dem Teilnehmer gehören, basierend auf den Informationen bezüglich der Dienstkette, die dem Teilnehmer zugeordnet ist, wobei der Routing-Header eine Angabe der Dienstkette einschließt, die dem Teilnehmer zugeordnet ist;
Empfangen (850) eines Datenpakets von der Teilnehmervorrichtung, die einem Teilnehmer zugeordnet ist; Abrufen (860) des Routing-Headers, der Paketen hinzuzufügen ist, die zu dem Teilnehmer gehören; Hinzufügen (870) des Routing-Headers zu dem Datenpaket; und
Weiterleiten (880) des Datenpakets mit dem Routing-Header entlang der Dienstkette, die dem in dem Routing-Header angegebenen Teilnehmer zugeordnet ist;
erneutes Autorisieren des Teilnehmers zum Empfangen aktualisierter Informationen bezüglich der Dienstkette, die dem Teilnehmer zugeordnet ist, als Reaktion auf eine Bestimmung, dass eine Änderung der Autorisierung für den Teilnehmer aufgetreten ist; und
dynamisches erneutes Bereitstellen der Dienstkette basierend auf der Änderung der Autorisierung.

16. Nichtflüchtiges maschinenlesbares Medium nach Anspruch 15, wobei der Routing-Header ein Segment-Routing-Header, SR-Header, ist, und wobei die Angabe der Dienstkette, die dem Teilnehmer zugeordnet ist, einen Stapel von einem oder mehreren SR-Labels einschließt.

17. Nichtflüchtiges maschinenlesbares Medium nach Anspruch 15, wobei der Routing-Header ein Netzwerkdienst-Header, NSH, ist und wobei die Angabe der Dienstkette, die dem Teilnehmer zugeordnet ist, eine Dienstpfadkennung einschließt.

18. Nichtflüchtiges maschinenlesbares Medium nach Anspruch 15, wobei die Dienstkette, die dem Teilnehmer zugeordnet ist, einen geordneten Satz von einem oder mehreren Diensten definiert, wobei der geordnete Satz von einem oder mehreren Diensten irgendeinen von einem Volumenbegrenzungsdienst, einem Dienst mit Mindestbandbreitengarantie und einem Deep Packet Inspection-Dienst einschließt.

## Revendications

1. Procédé mis en œuvre par un dispositif réseau jouant le rôle de passerelle de réseau à large bande, BNG, pour permettre un chaînage dynamique de services pour des abonnés, le procédé comprenant :
la réception (810) d'un paquet de premier signe de vie depuis un dispositif d'abonné associé à un abonné ;
la transmission (820), à un serveur d'authentification, autorisation et comptabilité, AAA, d'une demande pour authentifier l'abonné en réponse à la réception du paquet de premier signe de vie depuis le dispositif d'abonné associé à l'abonné ;
la réception (830) d'informations se rapportant à une chaîne de services associée à l'abonné lors d'une authentification réussie de l'abonné par le serveur AAA ;
la génération (840) d'un en-tête de routage à ajouter aux paquets appartenant à l'abonné sur la base des informations se rapportant à la chaîne de services associée à l'abonné, dans lequel l'en-tête de routage inclut une indication de la chaîne de services associée à l'abonné ;
la réception (850) d'un paquet de données depuis le dispositif d'abonné associé à un abonné ;
la récupération (860) de l'en-tête de routage à ajouter aux paquets appartenant à l'abonné ;
l'ajout (870) de l'en-tête de routage au paquet de données ;
l'acheminement (880) du paquet de données avec l'en-tête de routage le long de la chaîne de services associée à l'abonné indiquée dans l'en-tête de routage ;
la réautorisation de l'abonné pour recevoir des informations mises à jour se rapportant à la chaîne de services associée à l'abonné en réponse à une détermination qu'un changement d'autorisation s'est produit pour l'abonné ; et
le réapprovisionnement dynamique de la chaîne de services sur la base du changement d'autorisation.

2. Procédé selon la revendication 1, dans lequel les informations se rapportant à la chaîne de services associée à l'abonné sont reçues du serveur AAA ou d'un contrôleur de réseautage défini par logiciel, SDN.

3. Procédé selon la revendication 1, dans lequel l'en-tête de routage est un en-tête de routage de segment SR, et
dans lequel l'indication de la chaîne de services associée à l'abonné inclut une pile d'une ou plusieurs étiquettes SR.

4. Procédé selon la revendication 1, dans lequel l'en-tête de routage est un en-tête de service réseau, NSH, et
dans lequel l'indication de la chaîne de services associée à l'abonné inclut un identificateur de trajet de service.

5. Procédé selon la revendication 1, comprenant en outre :
l'identification de l'abonné sur la base de l'un quelconque parmi une adresse de protocole Internet, IP, source
indiquée dans le paquet de données, une adresse de commande d'accès au support, MAC, source
indiquée dans le paquet, et un identificateur de session, ID.

6. Procédé selon la revendication 1, comprenant en outre :
la transmission, à un serveur AAA, d'un message de début de comptabilisation, dans lequel le message de début de comptabilisation amène le serveur AAA à amener une fonction de politique et de règles d'imputation, PCRF, à approvisionner des paramètres de service se rapportant à un ou plusieurs services de la chaîne de services associée à l'abonné à un ou plusieurs dispositifs réseau qui appliquent le ou les services de la chaîne de services associée à l'abonné.

7. Procédé selon la revendication 6, dans lequel l'approvisionnement des paramètres de service par la PCRF inclut l'approvisionnement à une passerelle Internet d'informations se rapportant à une chaîne de services en aval associée à l'abonné, dans lequel la passerelle Internet doit ajouter un deuxième en-tête de routage aux paquets destinés au dispositif d'abonné associé à l'abonné, dans lequel le deuxième en-tête de routage inclut une indication de la chaîne de services en aval associée à l'abonné.

8. Procédé selon la revendication 1, dans lequel la chaîne de services associée à l'abonné définit un ensemble ordonné d'un ou plusieurs services, dans lequel l'ensemble ordonné d'un ou plusieurs services inclut l'un quelconque parmi un service de limite de volume, un service de garantie de largeur de bande minimale, et un service d'inspection approfondie de paquets.

9. Dispositif réseau (904) pour faire office de passerelle de réseau à large bande, BNG (100) qui permet un chaînage dynamique de services pour des abonnés, le dispositif réseau comprenant :
un ensemble d'un ou plusieurs processeurs (942) ; et
un support de stockage non transitoire lisible par machine (948) dans lequel est stocké un composant de chaînage dynamique de services (963), qui lorsqu'il est exécuté par l'ensemble d'un ou plusieurs processeurs, amène le dispositif réseau à recevoir un paquet de premier signe de vie depuis un dispositif d'abonné associé à un abonné, transmettre, à un serveur d'authentification, autorisation et comptabilité, AAA,, une demande pour
authentifier l'abonné en réponse à la réception du paquet de premier signe de vie provenant du dispositif d'abonné associé à l'abonné, recevoir des informations se rapportant à une chaîne de services associée à l'abonné lors d'une authentification réussie de l'abonné par le serveur AAA, générer un en-tête de routage à ajouter aux paquets appartenant à l'abonné sur la base des informations se rapportant à la chaîne de services associée à l'abonné, dans lequel l'en-tête de routage inclut une indication de la chaîne de services associée à l'abonné, recevoir un paquet de données depuis le dispositif d'abonné associé à un abonné, récupérer l'en-tête de routage à ajouter aux paquets appartenant à l'abonné, ajouter l'en-tête de routage au paquet de données, et acheminer le paquet de données avec l'en-tête de routage le long de la chaîne de services associée à l'abonné indiquée dans l'en-tête de routage, réautoriser l'abonné pour recevoir des informations mises à jour se rapportant à la chaîne de services associée à l'abonné en réponse à une détermination qu'un changement d'autorisation s'est produit pour l'abonné et réapprovisionner dynamiquement la chaîne de services sur la base du changement d'autorisation.

10. Dispositif réseau selon la revendication 9, dans lequel les informations se rapportant à la chaîne de services associée à l'abonné sont reçues du serveur AAA ou d'un contrôleur de réseautage défini par logiciel, SDN.

11. Dispositif réseau selon la revendication 9, dans lequel l'en-tête de routage est un en-tête de routage de segment, SR, et dans lequel l'indication de la chaîne de services associée à l'abonné inclut une pile d'une ou plusieurs étiquettes SR.

12. Dispositif réseau selon la revendication 9, dans lequel l'en-tête de routage est un en-tête de service réseau, NSH, et dans lequel l'indication de la chaîne de services associée à l'abonné inclut un identificateur de trajet de service.

13. Dispositif réseau selon la revendication 9, dans lequel le composant de chaînage dynamique de services, lorsqu'il est exécuté par l'ensemble d'un ou plusieurs processeurs, amène en outre le dispositif réseau à transmettre, à un serveur AAA, un message de début de comptabilisation, dans lequel le message de début de comptabilisation amène le serveur AAA à amener une fonction de politique et de règles d'imputation, PCRF, à approvisionner des paramètres de service se rapportant à un ou plusieurs services de la chaîne de services associée à l'abonné à un ou plusieurs dispositifs réseau qui appliquent le ou les services de la chaîne de services associée à l'abonné.

14. Dispositif réseau selon la revendication 13, dans lequel l'approvisionnement des paramètres de service par la PCRF inclut l'approvisionnement à une passerelle Internet d'informations se rapportant à une chaîne de services en aval associée à l'abonné, dans lequel la passerelle Internet doit ajouter un deuxième en-tête de routage aux paquets destinés au dispositif d'abonné associé à l'abonné, dans lequel le deuxième en-tête de routage inclut une indication de la chaîne de services en aval associée à l'abonné.

15. Support non transitoire lisible par machine dans lequel est stocké un code informatique, qui lorsqu'il est exécuté par un ensemble d'un ou plusieurs processeurs d'un dispositif réseau jouant le rôle de passerelle de réseau à large bande, BNG, amène le dispositif réseau à mettre en œuvre des opérations pour permettre un chaînage dynamique de services pour des abonnés, les opérations comprenant :
la réception (810) d'un paquet de premier signe de vie depuis un dispositif d'abonné associé à un abonné ;
la transmission (820), à un serveur d'authentification, autorisation et comptabilité, AAA, d'une demande pour authentifier l'abonné en réponse à la réception du paquet de premier signe de vie depuis le dispositif d'abonné associé à l'abonné ;
la réception (830) d'informations se rapportant à une chaîne de services associée à l'abonné lors d'une authentification réussie de l'abonné par le serveur AAA ;
la génération (840) d'un en-tête de routage à ajouter aux paquets appartenant à l'abonné sur la base des informations se rapportant à la chaîne de services associée à l'abonné, dans lequel l'en-tête de routage inclut une indication de la chaîne de services associée à l'abonné ;
la réception (850) d'un paquet de données depuis le dispositif d'abonné associé à un abonné ; la récupération (860) de l'en-tête de routage à ajouter aux paquets appartenant à l'abonné ;
l'ajout (870) de l'en-tête de routage au paquet de données ; et
l'acheminement (880) du paquet de données avec l'en-tête de routage le long de la chaîne de services associée à l'abonné indiquée dans l'en-tête de routage ;
la réautorisation de l'abonné pour recevoir des informations mises à jour se rapportant à la chaîne de services associée à l'abonné en réponse à une détermination qu'un changement d'autorisation s'est produit pour l'abonné ; et
le réapprovisionnement dynamique de la chaîne de services sur la base du changement d'autorisation.

16. Support non transitoire lisible par machine selon la revendication 15, dans lequel l'en-tête de routage est un en-tête de routage de segment, SR, et dans lequel l'indication de la chaîne de services associée à l'abonné inclut une pile d'une ou plusieurs étiquettes SR.

17. Support non transitoire lisible par machine selon la revendication 15, dans lequel l'en-tête de routage est un en-tête de service réseau, NSH, et dans lequel l'indication de la chaîne de services associée à l'abonné inclut un identificateur de trajet de service.

18. Support non transitoire lisible par machine selon la revendication 15, dans lequel la chaîne de services associée à l'abonné définit un ensemble ordonné d'un ou plusieurs services, dans lequel l'ensemble ordonné d'un ou plusieurs services inclut l'un quelconque parmi un service de limite de volume, un service de garantie de largeur de bande minimale, et un service d'inspection approfondie de paquets.
